# EUROPEAN PATENT SPECIFICATION

(11) **EP 3 043 969 B1**
(45) Date of publication and mention of the grant of the patent: **08.11.2017**
(21) Application number: 14844345.0
(22) Date of filing: 12.09.2014
(51) Int. Cl.: B25F 5/02, B25H 1/00

(54) **A HAND-HELD POWER TOOL AND ATTACHMENTS**
TRAGBARES ELEKTROWERKZEUG UND AUFSÄTZE
OUTIL ÉLECTRIQUE À MAIN ET ATTACHEMENTS

(30) Priority: 13.09.2013 AU 2013903523; 19.12.2013 AU 2013904967
(43) Date of publication of application: 20.07.2016
(73) Proprietor: Brand Developers Aust Pty Ltd, Port Melbourne, Victoria 3207 (AU)
(72) Inventor: FISHER, James, Kohimarama, Auckland, 1071 (NZ)
(74) Representative: Kolster Oy Ab
(86) International application number: PCT/AU2014/000904
(87) International publication number: WO 2015/035459

(56) References cited:
- WO-A1-02/26439
- CN-A- 102 668 897
- DE-U1- 20 207 381
- US-A1- 2002 131 834
- US-A1- 2002 197 123
- US-A1- 2003 206 779
- US-A1- 2003 206 779
- US-A1- 2005 034 276
- US-A1- 2005 200 087
- US-A1- 2005 200 087
- US-A1- 2007 022 595
- US-A1- 2010 316 457
- US-A1- 2010 316 457

## Description

### Technical Field

The present disclosure relates generally to the field of power tools and attachments for power tools.

### Background Art

Hand-held cutting tools are used to shape a workpiece by cutting material from the workpiece. These tools include drills, routers, jigsaws and the like, in which an electric motor is housed in a housing and drives a revolving or reciprocating cutting blade or drill-bit. During operation of these tools, the cutting blade or drill-bit extends from the housing and into a workpiece to cut the workpiece. Such previously known tools are disclosed in US 2010/316457 A1 and US 2005/200087 A1, for instance.

An operator holds such tools by grasping the housing or grasping a fixed grip or handle that is integrally formed with the housing. The tool is then held at a fixed angle - such as perpendicular - to a plane of the workpiece during operation.

Maintaining precise positioning of the tool during operation can be difficult since force is often required to drive the tool through the workpiece and to resist rotation of the tool, for example when a drill bit becomes stuck in the workpiece. Precise control is also difficult since the handle or housing is in fixed orientation relative to the cutting tool and, as such, will not always have an ideal orientation relative to the workpiece during use.

During use the tool will vibrate and often becomes warm. Both of these conditions cause an operator's arms to become fatigued. In turn, this reduces the operator's ability to comfortably use and precisely control tools for an extended period of time.

It is to be understood that, if any prior art is referred to herein, such reference does not constitute an admission that the prior art forms a part of the common general knowledge in the art, in Australia or any other country.

### Summary of the Disclosure

The invention refers to a handle attachment for a cutting tool as claimed in claim 1 and its subsequent claims.

Examples of particular devices are as follows:
Disclosed is a support for a cutting tool, the support comprising:
   a base for positioning on a working surface,
   a supporting member extending between two spaced positions on the base and being spaced from the base between the spaced positions,
   a coupling member for coupling a cutting tool receiving body to the supporting member in a plurality of angular positions relative to the base.

The supporting member may be arcuate.

The coupling member may be a coupling shaft configured to be received in an aperture of the tool receiving body.

The supporting member may comprise one or more apertures for receiving a fastener for fastening the coupling member to the supporting member in the plurality of angular positions.

The coupling member may comprise a curved plate for engagement with the supporting member and having a substantially similar curvature to the supporting member.

The supporting member may comprise a guiding mechanism to guide positioning of the coupling member at the plurality of angular positions. The guiding mechanism may further comprise a plurality of guiding notches and a guide pin, wherein engaging the guide pin at each of the guiding notches positions the coupling member at the plurality of angular positions.

The base may comprise a first foot portion spaced away from a second foot portion, said foot portions adapted for supporting the base on a working surface. The supporting member extends between the first foot portion and the second foot portion.

An edge guide may be attached to the base.

The coupling member includes an adjustment mechanism for adjusting a height of the tool receiving body relative to the base.

Each spaced position may comprise a foot portion. Each spaced position may provide an attachment means for attaching a guide or clamp to the support. The guide may be an edge guide. Each attachment means may comprise a clamping screw.

The foot portions are interconnected by the supporting member, The supporting member may be substantially U-shaped. The supporting member may curve outwardly from the plane of the foot portions and from the plane of the workpiece when in use. The supporting member may be a connecting portion.

The coupling member may comprise a handle attachment.

The coupling member may include an adjustment mechanism for adjusting a height of the tool receiving body relative to the base. The adjustment mechanism may comprise:
an elongate slot; and
a fastener for fastening the tool receiving body to the coupling member, said fastener adapted to fasten the tool at a plurality of coupling locations along the slot.

A peripheral edge of the arcuate portion may define an opening for receiving a portion of a conduit adapted to be connected to a dust collecting device. A retainer may be positioned in the opening, said retainer including an aperture for receiving the conduit.

There may further be provided a cutting system comprising a support as discussed above, a tool receiving body and a cutting tool adapted to be received in the tool receiving body of the support, wherein the tool is moveable with the tool receiving body and is thereby also securable at each of the angular positions relative to the base.

The coupling member may comprise a shaft extending from one of the support and cutting tool receiving body. The shaft may extend from the support. The shaft may be received in a shaft aperture in the cutting tool receiving body. The cutting tool receiving body may slide on the coupling member between an extended position and a retracted position relative to the support wherein, when in the extended position the coupling member is further from the workpiece in use than when in the retracted position.

The shaft may be provided on an curved or arcuate shaft plate. The shaft plate may conform to a shape of the arcuate supporting member. The shaft plate may slide over the arcuate supporting member to adjust the angular position of the cutting tool receiving body. The shaft plate may be locked in position, to selectively or removably fix the angular position of the cutting tool receiving body, by a fastener. The shaft plate may comprise a plurality of notches for engagement by a locking pin mounted to the supporting member to fix the angular position of the cutting tool receiving body.

The notches may be located to fix the angular position of the cutting tool receiving body in predetermined angular positions relative to the base.

The base may comprise a pair of legs. At least one of the legs may be wider at opposite ends of the leg than at a thinned section intermediate the ends. One or both legs may be scalloped between opposite ends of the repsective leg. The coupling member may attach at one end of the legs, an attachment mount is provided at the opposite end of the legs, and the attachment mount is located distally of the thinned section and coupling member.

Also disclosed is a handle attachment for coupling to a cutting tool, the handle attachment comprising:
a handle portion for gripping by a user; and a coupling arrangement for coupling the cutting tool to the handle portion, the coupling arrangement comprising:
   a first collar portion for receiving and retaining a housing portion of the cutting tool; and
   a second collar portion for receiving and retaining a further portion of the coupled tool, the further portion being smaller in cross-section than the housing portion and being located forwardly of the housing portion.

The handle portion may be fastened to the body for adjustment of orientation of the handle portion with reference to a longitudinal axis of the in use cutting tool by rotation of the handle portion.

The handle portion may be rotatably coupled to a handle connector extending outwardly from the body of the handle attachment.

The handle portion may be operable to be attached to the body in a plurality of orientations with reference to a longitudinal axis of the tool body. The handle attachment may further comprise an adjustment mechanism for varying the orientation of the handle portion in between two or more of the plurality of orientations.

The handle portion may be operable to be rotated from a zero orientation to plus or minus ninety degrees (90°) from the zero orientation, the orientation of the handle portion being with reference to the longitudinal axis of the cutting tool.

The handle attachment may further comprise a lock for locking the orientation of the handle in one of the plurality of orientations.

The handle portion may be attached to the body at an end of the handle portion.

The first collar portion may be spaced away from the second collar portion.

The first collar and the second collar may be connected by a collar connector.

The coupling arrangement may further comprise a curved supporting plate for supporting a curved housing of the cutting tool.

The first collar may further comprise a locking aperture for receiving and engaging a locking pin positioned on the first housing portion.

The body may comprise a connecting member for connecting the coupling arrangement to the handle portion. The connecting portion may extend in a direction that is substantially parallel to the longitudinal axis of the coupled tool. The connecting portion may define a sleeve for and an in use underside, said underside defining an opening for receiving a shaft into the sleeve. The handle attachment may further comprise a fastener for fastening the handle attachment to the shaft.

There may also be provided comprising a tool system as described above, and a handle attachment as described above, wherein each of the attachment locations positions the coupling member at a designated angle between the coupling member and the plane of the working surface.

Also disclosed is a depth guide comprising:
a depth guide base for placement relative to a working surface;
a guide positioned in between a collar for receiving a cutting tool and the depth guide base and for engaging the collar thereby to locate the depth guide base relative to the collar;
a depth adjustment mechanism for adjusting a distance between the collar portion and depth guide base, said mechanism being engaged with the collar and moveable relative to the collar to change a height of the tool relative to the working surface.

The depth guide may further comprise the collar.

The depth guide base may comprise an annular base plate, wherein a cutting bit attached to the cutting tool projects through the opening in the annular base plate when in use.

The collar may be the collar of a handle attachment. The guide may be locatable on the collar to as to locate the depth guide base and depth adjustment mechanism relative to the collar. The guide may engage an outer surface of the collar. The guide may comprise one of ribs and recesses, with the other of the ribs and recesses being provided on the collar, the ribs and recesses cooperating to locate the guide relative to the collar.

The cutting tool may engage the collar using a bayonet fitting. The collar may comprise a split band in which the cutting tool is positioned, the ends of the band being brought together and locked together to retain the tool in the collar.

Also disclosed is a handle attachment comprising:
a handle portion for gripping by a user and moveable to a desired position relative to a cutting tool;
a coupling arrangement for coupling the handle portion to the cutting tool; and
a locking mechanism for locking the handle portion in the desired position and being releasable to enable movement of the handle portion to another position.

The locking mechanism may releasably lock the handle portion selectively in each of a plurality of positions relative to the coupling arrangement.

Each position of the handle portion may be an angular orientation of the handle portion relative to the coupling arrangement.

In one position, the handle portion may be substantially perpendicular to the longitudinal axis of the cutting tool.

In another position, the handle portion may be substantially parallel to the longitudinal axis of the cutting tool.

The handle portion may be able to be selectively positioned between the parallel and perpendicular orientations.

The plurality of locations may comprise a plurality of discrete locations.

The plurality of locations may provide for continuously variable positions of the handle attachment.

The handle may include a grip and is attachable to the coupling arrangement in a first condition, whereby the grip faces away from a workpiece when the handle attachment is in use, and a second condition, whereby the grip face towards the workpiece when the handle attachment is in use.

In the second condition the handle postion may be upside down with respect to the position of the handle portion when in the first condition.

Also disclosed herein is a support for a cutting tool, the support comprising:
a base for positioning on a working surface,
an arcuate supporting member extending across and curved outwardly in relation to the base, at least a part of the arcuate supporting member being at an elevated position with reference to a plane of the base,
a coupling member for coupling a cutting tool receiving body to the support, the coupling member being adapted for attachment along a plurality of attachment locations on a body of the arcuate supporting member to position the coupling member at a plurality of angular positions, each of the plurality of angular positions designating an angle of inclination between the coupling member and the plane of the working surface.

In an example, the coupling member may be a coupling shaft configured to be received in an aperture of the tool receiving body.

In an example the arcuate member comprises at least one aperture for receiving a fastener for fastening the coupling member to the arcuate portion at the plurality of attachment locations.

In an example, the coupling member comprises a curved plate with a substantially similar curvature to the arcuate supporting portion for engagement with the arcuate member.

In an example, the arcuate member comprises a guiding mechanism to guide the positioning of the coupling member at the plurality of attachment locations.

In an example, the guiding mechanism further comprises a plurality of guiding notches and a guide pin, wherein engaging the guide pin at each of the guiding notches positions the coupling member at the plurality of angular positions.

In an example, the base comprises a first foot portion spaced away from a second foot portion, said foot portions adapted for supporting the base on a working surface.

In an example, the arcuate member extends between the first foot portion and the second foot portion.

In an example, the base includes one or more clamps for clamping the base to an edge guide.

In an example, the coupling member has a plurality of coupling locations along a length of the coupling member thereby providing an adjustment mechanism for adjusting the height of the tool receiving body relative to the base.

In an example, the adjustment mechanism comprises:
an elongate slot provided in the coupling member wherein the plurality of coupling locations are provided along a length of the elongate slot; and
a fastener for fastening the tool receiving body to the coupling shaft, said fastener adapted to be positioned at the plurality of coupling locations.

In an example, the support for the cutting tool is adapted to connect to a dust collecting device for collecting dust created during operation of the cutting tool. A peripheral edge of the supporting member may be adapted to connect to the dust collection device. The support may provide an aperture to which the dust collecting device connects to extract dust creating during operation of the cutting tool.

In an example, a retainer is positioned in the opening, said retainer including an aperture for receiving the conduit.

Also disclosed herein is a cutting system, said system comprising an attachment as set forth above, a tool receiving body as also set forth above and a cutting tool adapted to be received in the tool receiving body wherein each of the attachment locations positions the coupling member at a designated angle between the coupling member and the plane of the working surface thereby positioning a cutting tool bit of the cutting tool at the designated angle to the working surface.

Also disclosed herein is a handle attachment for coupling to a cutting tool, the handle attachment comprising:
a handle portion for gripping by a user, the handle portion being substantially perpendicular to a longitudinal axis of the coupled cutting tool;
a coupling arrangement for coupling a body of the cutting tool to the handle portion, the coupling arrangement comprising a first collar portion and a second collar portion,
the first collar portion adapted for receiving and retaining a forwardly located first housing portion of the coupled tool; and
the second collar portion adapted for receiving and retaining a nose portion of the body of the coupled tool, said nose portion located adjacent to the forwardly located housing portion of the coupled tool.

In an example, the first collar portion is spaced away from a second collar portion.

In an example, the first collar portion and the second collar portion are connected by a collar connector.

In an example, the coupling arrangement further comprises a curved supporting plate for supporting a curved body of the cutting tool.

In an example, the first collar portion may comprise locking means for locking the tool into the coupling arrangement. The locking means may restrict relative rotation between the tool and first collar portion during operation of the tool. The first collar portion may comprise a locking aperture for receiving and engaging a locking pin positioned on the first housing portion. The locking pin may comprise a retractable pin. The locking pin may be located on a front portion of the housing.

The shape of the first collar portion may be adapted to conform to a shape of the housing portion.

The housing and the first collar portion may comprise cooperating guiding means for guiding insertion of the housing into the first collar portion. The guiding means may also prevent relative rotation of the tool and handle attachment during operation of the tool. The guiding means may comprise one or more guiding channels on an inner surface of the first housing portion, and a like number of projections or ribs protruding outwardly on the first housing portion.

In an example, the handle attachment further includes a connecting member for connecting the coupling arrangement to the handle portion.

In an example, the connecting portion extends in a direction that is substantially parallel to the longitudinal axis of the coupled tool.

In an example, the connecting portion comprises an in use underside, said underside defining an opening for receiving a shaft.

In an example, the handle attachment further comprises a fastener for fastening the handle attachment to the shaft.

Also disclosed herein is a tool system comprising a support as set forth above, and a handle attachment as also set forth above wherein each of the attachment locations positions the coupling member at a designated angle between the coupling member and the plane of the working surface.

Also disclosed herein is a depth guide for coupling to a cutting tool; the depth guide comprising:
a depth guide base for placement on a working surface;
a collar for receiving a housing portion of the cutting tool;
a guide portion positioned in between the collar and the depth guide base, said guide portion comprising an opening for receiving a bit mounted in the cutting tool; said guide portion comprising engaging jaws for engaging an outer wall of the collar portion
a depth adjustment mechanism for adjusting the position of the collar portion relative to the guide portion; said mechanism comprising at least two sets of ribs, each of the two sets of ribs inter-engaging with a respective set of complementary channels for movement of the collar along the engaging jaws in a direction along a longitudinal axis of the coupled tool.

In an example, the two sets of ribs are provided on each of the engaging jaws and the respective set of complementary channels provided on the outer wall of the collar portion for receiving the ribs of the engaging jaws. Each set of ribs may comprise a pair of ribs.

In an example, the two sets of ribs are provided on the outer wall of the bracket and the respective channels are provided on a first engaging jaw and a second engaging jaw respectively.

The cutting tool may be adapted imparting rotary motion to a cutting bit. In this circumstance the cutting bit may be, for example, a drill bit or router blade. The cutting tool may be adapted to imparting reciprocal motion to a cutting bit. In this circumstance the cutting bit may be, for example, a jigsaw blade.

The tool may be adapted to be used with more than one type of cutting bit. By changing the cutting bit, the tool may provide the functions of two or more of a drill, a router, a jigsaw, a grinder and a saw.

The housing may be generally cylindrical in shape.

The housing may comprise two or more moulded pieces that join together to form the housing. The two or more moulded pieces may be attached using an adhesive. The two or more moulded piece may be attached using fasteners. The housing may house a motor. The motor may be electrically driven. The motor may receive power from a power main through a cord. The motor may be battery powered. The battery for powering the motor may be housed within the housing. The cord may attach to the housing through a connecting sleeve. The motor may be a multiple speed motor. The speed of the motor may be controlled by a control device, such as a button or rotating switch, on the housing.

A grip may be formed on or attached to the housing to enable an operator to grip the housing. The grip may comprise one or more gripping ribs. The grip may comprise a gripping surface. The grip may comprise gripping ribs and a gripping surface. The gripping surface may surround the gripping ribs.

The motor may comprise a drive shaft for driving a cutting bit. The cutting bit may be coupled to the drive shaft by a retainer structure. The retainer structure may comprise a chuck for mechanically coupling the cutting bit to the drive shaft.

The retainer structure may include a collet nut and collet. The collet nut may be attached by a screw thread to one of the drive shaft and the cutting bit. The collet nut may be attached to the drive shaft by a screw thread.

The forwardly located first housing portion of the housing may form a coupling location. The first collar portion may secure the handle attachment to the housing at the coupling location.

### Brief Description of Drawings

Embodiments of the tool and components therefor will be described by way of example only in which:
Figure 1 is a perspective view of a cutting tool in accordance with an embodiment.
Figure 2 is rear view of the cutting tool shown in Figure 1.
Figure 3 is a first side view of the cutting tool.
Figure 4 is a front view of the cutting tool.
Figure 5 is a top view of the cutting tool.
Figure 6 is a second side view of the cutting tool.
Figure 7 is an underside view of the cutting tool.
Figure 8 is a perspective view of a jig-saw handle attachment of a handle attachment in accordance with an embodiment.
Figure 9A is a frontal view of the jig-saw handle attachment.
Figure 9B is a side view of the jig-saw handle attachment.
Figure 9C is a rear end view of the jig-saw handle attachment.
Figure 9D is a top view of the jig-saw handle attachment.
Figure 9E is an underside view of the jig-saw handle attachment.
Figure 10 is a perspective view of the cutting tool being coupled with the jig-saw handle attachment.
Figure 11 is a side view of the cutting tool being coupled with the jig-saw handle attachment.
Figure 12 is a perspective view of the base plate attachment in accordance with an embodiment of the invention.

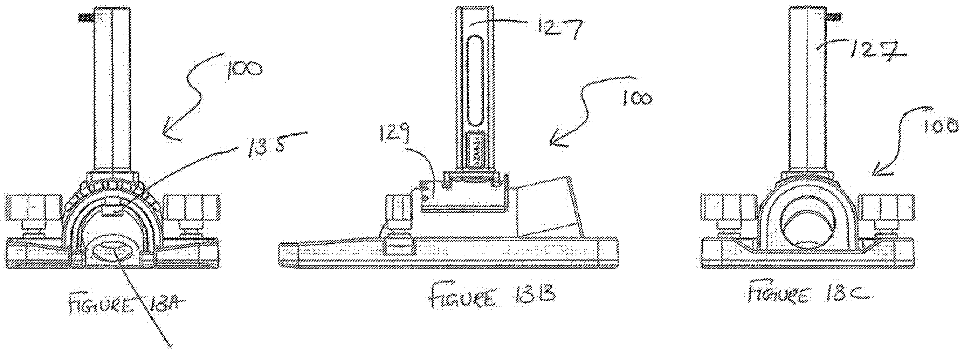

Figure 13A is a front end view of the base plate attachment.
Figure 13B is a side view of the base plate attachment.
Figure 13C is a rear end view the base plate attachment.

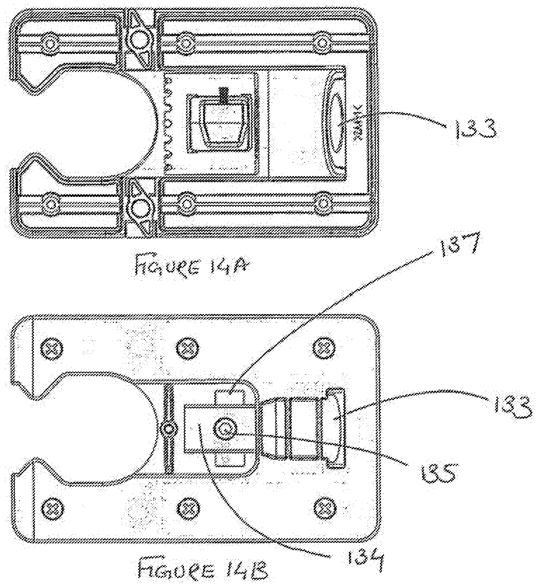

Figure 14A is an underside view of the base plate attachment.
Figure 14B is a top view of the base plate attachment.
Figure 15A is an underside view of the base plate attachment in assembly with a dust collector device and an edge guide.
Figure 15B is a perspective view of the base plate attachment in assembly with the dust collector device and the edge guide.
Figure 15C is a side view of the base plate attachment in assembly with the dust collector device and the edge guide.
Figure 15D is a front end view of the base plate attachment in assembly with the dust collector device and the edge guide.
Figure 16 is a perspective view of the base plate attachment in assembly with the jig-saw handle attachment, the dust collector device and the edge guide.
Figure 17 is a first side view of the base plate attachment in assembly with the jig-saw handle attachment, the dust collector device, the edge guide and a cutting tool coupled with the jig-saw handle attachment.
Figure 18 is a second side view of the base plate attachment in assembly with the jig-saw handle attachment, the dust collector device, the edge guide and the cutting tool coupled with the jig-saw handle attachment.
Figure 19 is a front end view of the base plate attachment in assembly with the jig-saw handle attachment, the dust collector device, the edge guide and the cutting tool coupled with the jig-saw handle attachment.
Figure 20 is a rear end view of the base plate attachment in assembly with the jig-saw handle attachment, the dust collector device, the edge guide and the cutting tool coupled with the jig-saw handle attachment.
Figure 21 is a perspective view of a depth guide attachment.
Figure 22A is a perspective view of an adjustable handle attachment.
Figures 22B, 23A, 23B and 23C are, respectively, side, bottom and top views of the adjustable handle attachment.
Figures 24A, 24B, 24C and 24D are, respectively, a first side view, a rear end view, a second side view, and a third side view of a handle part of the adjustable handle attachment.
Figures 25A, 25B and 25C are, respectively, a first side view, a front end view and a second side view of a coupling mechanism for coupling the tool to the adjustable handle attachment.
Figures 26A, 26B, 26C and 26D are, respectively, a side view, a perspective view, a top view and a bottom view of the cutting tool in assembly with the base plate attachment of Figures 12 and 13, the adjustable handle attachment of Figures 22A and 22B, the dust collector device and the edge guide of Figures 15A to 15D.
Figures 27A, 27B and 27C are, respectively, a front perspective view, rear perspective view and side view of the cutting tool and base plate attachment in assembly with the adjustable handle attachment in a parallel orientation.
Figures 28A and 28B show an alternative handle arrangement.
Figure 29 is an exploded view of the handle arrangement of Figures 28A and 28B.

### Detailed Description

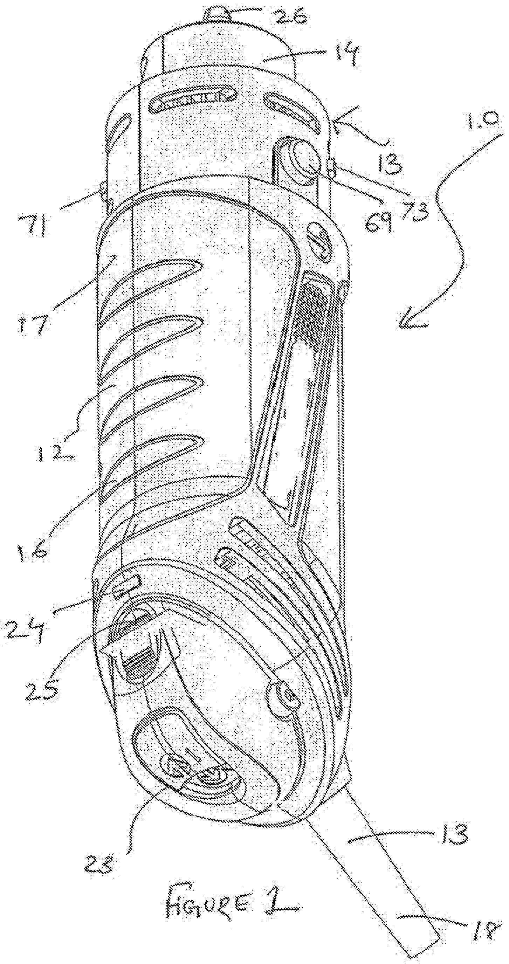

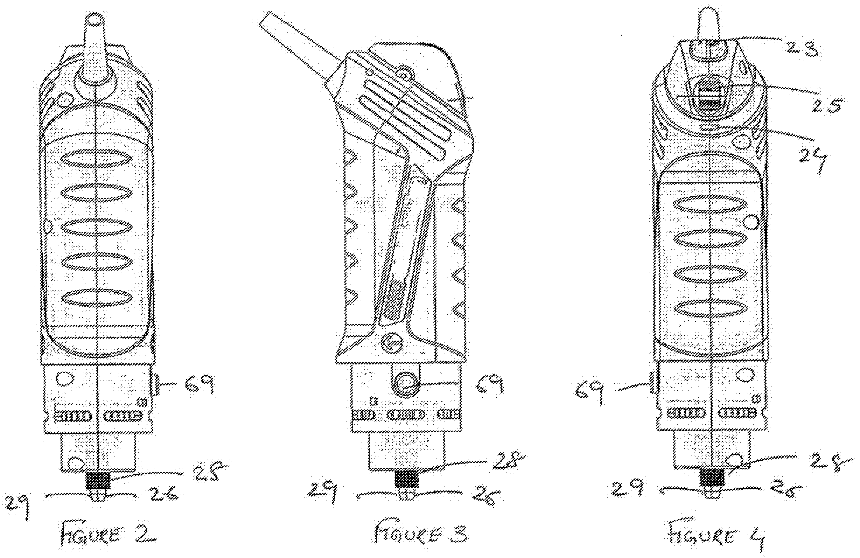

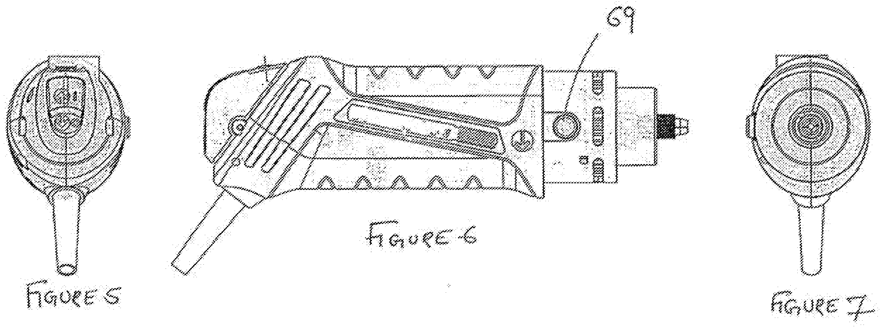

A cutting tool in the form of a rotary cutting tool including features for improving the ability of an operator to operate and control the tool is shown generally at 10 in FIGS. 1 to 7. (It should be understood that, although the tool and components will be described in detail herein with reference to the exemplary embodiment of cutting tool 10, they may be applied to, and find utility in, other hand-held power tools as well.) The cutting tool 10 includes a motor housing 12. The motor housing 12 is preferably made of an electrically insulating material, such as plastic. The motor housing 12 is generally cylindrical in shape, and may include raised gripping ribs 16 surrounded by gripping surface 17 formed thereon that allow a firm grip on the cutting tool 10 to be maintained when the cutting tool 10 is grasped around the motor housing 12. The motor housing 12 comprises two moulded pieces which are joined together using fasteners such as screws and adhesives to form the housing 12. An electric motor (not visible in FIGS. 1 to 7) is enclosed within the motor housing 12. The electric motor receives electrical power through an electrical cord 18. A thick rubber connecting sleeve 13 is preferably provided where the electrical cord 18 is joined to the motor housing 12. The connecting sleeve 13 advantageously prevents crimping, cracking, and excessive wear of the cord at the end of the electrical cord 18. The electric motor is turned on and off by a power on/off switch 23 mounted on the motor housing 12. The power on/off switch 23 is preferably a multiple-position on/off switch. The multiple positions of the switch may define various on positions each corresponding to a different motor speed, and an off position. The on-off switch 23 may also function as an overload-shut off switch to automatically switch off the electric motor whenever the electric motor gets overloaded and/or overheated. A power indicator in the form of a LED indicator 24 is also provided. Advantageously, the LED indicator illuminates when the on-off switch 23 is switched to the on position.

The electric motor is capable of operation at multiple speeds. A motor speed control button 25 may be provided on the motor housing 22 for controlling the operating speed of the electric motor. The motor speed control button 25 may be implemented as a rotating switch that rotates between various different speed settings. The cutting tool 10 in accordance with the present disclosure may have an electric motor capable of being operated at five speeds. When the electric motor is turned on, e.g., using the multiple-position on/off switch 23, the motor begins operation at an initial preselected speed, e.g., a no-load rotation speed of 5 that denotes operation at 5,000RPM. Each the time the motor speed control button 25 is actuated, whilst the motor is on and running, the motor speed changes. For example, the motor speed may change from the initial 5,000 RPM to 20,000 RPM when the speed control button is actuated to 20. With the motor on and running, the motor speed preferably changes by one step, e.g., from 20,000 RPM to 25,000 RPM. A microprocessor or similar digital device is employed as a motor controller, mounted in the motor housing 12, to control the speed of the cutting tool motor each time the motor speed control button 25 is actuated.

An end of the motor shaft extends from one end of the motor housing 12 along the axis thereof. Attached to the end of the motor shaft is a retainer structure 26 for securing, e.g., a cutting tool bit, or other accessory, to the motor shaft. The cutting tool bit (not shown) has a cutting edge that spirals around the axis of the bit in a helical shape. When the electrical motor is in operation, the spiral cutting bit rotates at high speeds and cuts through a working surface provided on a work-piece.

During a cutting process, significant force is applied to the cutting tool bit in a direction that is perpendicular to the axis of the drill bit. Therefore, the retainer structure 26 can include a conventional drill-type chuck that mechanically connects the bit to the motor shaft (not shown). The retainer structure 26 includes a collet nut 28 and a collet 29 centered axially within a central aperture of the collet nut 28. The collet nut 28 is mounted on threads provided on the motor shaft. The tool bit is inserted into a central aperture of the collet 29. The collet nut 28 may be tightened, by hand and/or by a hand-held implement such as a wrench until the bit is held securely. The bit may be removed from the motor shaft, by loosening the collet nut 28.

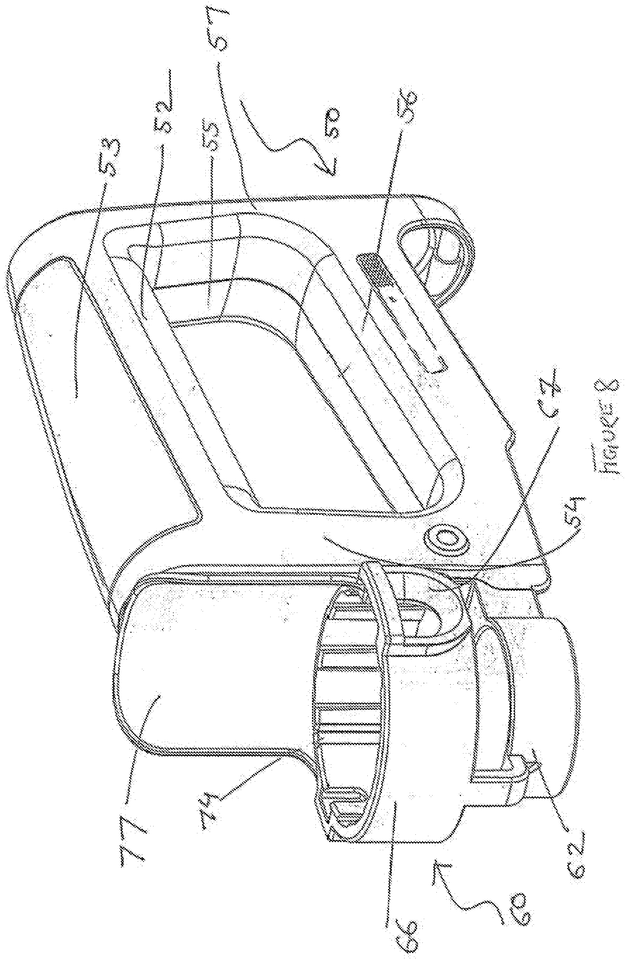

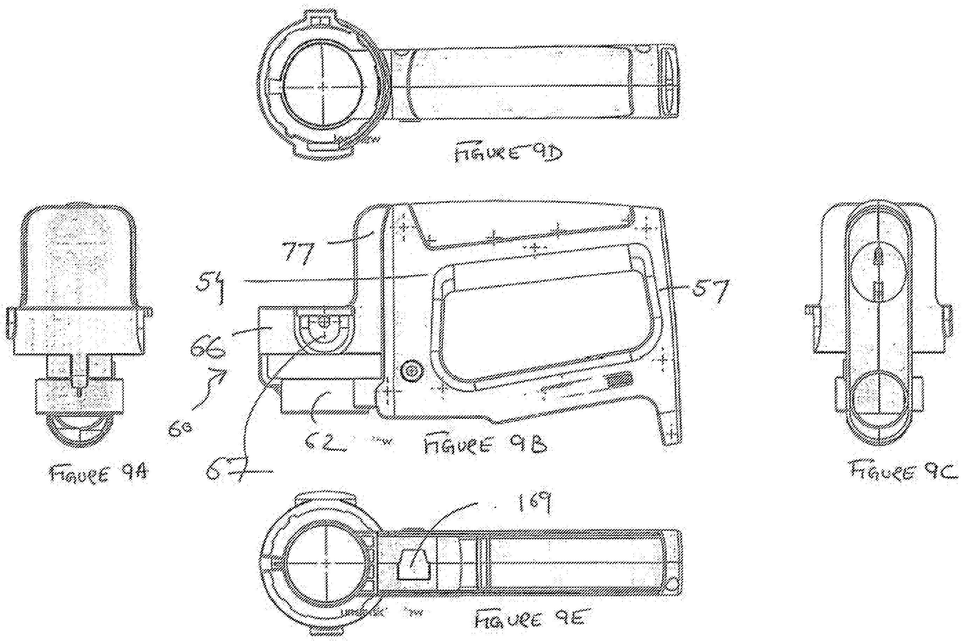

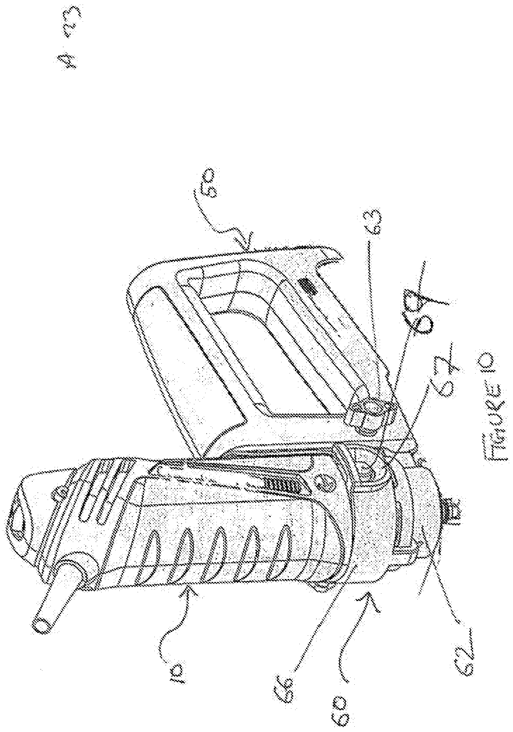

FIGS. 8 and 9, illustrate a tool receiving body in the form of a handle attachment 50. The attachment 50 includes a handle portion 52 and mechanisms 54, 56 for coupling and/or securing the handle attachment 50 to a cutting tool such as but not limited to the cutting tool 10 illustrated in Figures 1 to 7. The handle portion 52 includes a first outer surface 53 that is provided with a gripping surface that contacts a palm region of a user during operation. The handle portion 52 also includes a second surface 55 located on an underside of the handle portion. The handle portion 52 is configured such that the palm of an operator is positioned adjacent to the first surface 53 and the fingers of the operator are positioned adjacent to the second surface 55. A bottom portion 56 of the handle attachment and the handle portion 52 are connected by upright members 54 and 57. The second surface 55, bottom portion 56 and the upright members 54 and 57 define an aperture through which the fingers of an operator may be inserted. Accordingly, the second surface 55 and the first surface 53 cooperate to form a handle which may be gripped by a user of the attachment. The handle 52 is configured to be used in a manner similar to a 'jigsaw" style handle. In this manner, the handle portion 52 is arranged such that the first surface 53 and the second surface 55 are arranged substantially perpendicular to a longitudinal axis of a cutting tool to which the attachment 50 is coupled with. Thus, the handle 52 may be described as extending generally perpendicular to the longitudinal axis of a cutting tool when coupled to the cutting tool, in a manner similar to a "jigsaw" style handle. Such an arrangement is shown in the Figures 8 and 9 and also shown in Figures 10 to 11 and will be described in greater detail in subsequent passages. In this manner, a jigsaw style handle is provided for a cutting tool that is adapted or configured to form cuts in a workpiece in a lateral direction e.g., by moving a tool bit coupled to a tool across a surface of a workpiece, cuts may be formed through the workpiece as the tool bit is moved along the surface. Providing a jigsaw style handle as described herein is intended to enable a user to form cuts in a workpiece with greater control than if such a handle was not provided for the cutting tool. The term "substantially perpendicular" as used throughout this specification means "more perpendicular than not." Therefore, the angle of the handle (and surfaces 53 and 55) with respect to the axis of the coupled cutting tool may be varied from exactly perpendicular by several degrees without departing from the spirit and scope of the disclosure.

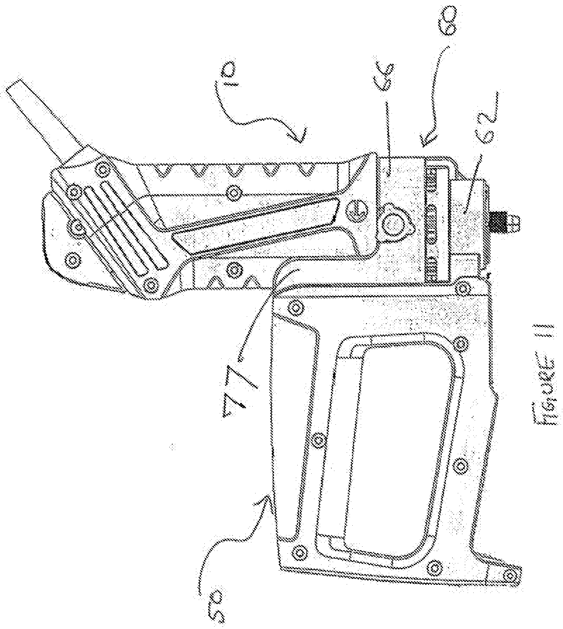

The handle attachment 50 is provided with a cutting tool coupling arrangement, presently embodied by coupling mechanism 60, for coupling a cutting tool such as the spiral saw 10 to the handle attachment 50. Figures 10 and 11 illustrate an exemplary embodiment in which the spiral cutting tool 10 is coupled with the handle attachment 50 also illustrated in Figures 8 and 9. The coupling mechanism 60 is described with reference to the handle attachment illustrated in Figures 8 and 9 and also the spiral cutting tool described in Figures 1 to 7. The coupling mechanism 60 may be relatively quickly and easily coupled to and released from the rotary cutting tool 10. The mechanism 60 includes a first collar portion, embodied by primary collar 66, that may be coupled to the housing 12 of the spiral cutting tool 10 to secure the mechanism 60 to the spiral cutting tool 10 at a coupling location. The collar 66 is provided with a locking aperture 67 that is adapted to receive a locking pin in the form of a retractable pin 69 that is provided on a front portion of the housing 12 of the tool 10. During a routine coupling operation, a front portion 13 of the housing 12 of the tool 10 is received into the collar 66. Advantageously, the substantially circular collar portion 66 is adapted to receive the front portion 13 of the tool 10. Advantageously, guiding means in the form of guiding projections 71 and 73 are also provided on the outer wall of the front portion of the housing 12 that are guided into guiding channels 74 and 76 respectively. The guiding channels 74 and 76 are provided in the inner walls of the collar 66. Provision of the guiding ribs 71, 73 and guiding channels 74 and 76 is particularly advantageous because it prevents the tool 10 from moving relative to the collar 66 whilst the rotary tool is in operation. Furthermore, the provision of a locking pin 69 that engages and locks into the locking aperture 67 further enables prevention of movement of the rotary tool relative to the collar 66. The locking pin 67 is adapted to be pushed inwards by a user's finger. Pushing the locking pin 67 inwards followed by pulling out the rotary tool 10 from the collar 66 enables uncoupling of the tool 10 from the coupling attachment 60. The coupling mechanism 60 is also provided with a secondary collar portion 62 for receiving a nose portion 14 of the tool housing 12. The nose portion 14 is located adjacent to the bit retaining structure 26 and is smaller in diameter in comparison with the front portion 13 of the tool housing 12. The secondary collar 62 and the primary collar 66 are also connected by a collar connector 63. The secondary collar 62 is supported on and attached to the bottom portion 56 of the handle attachment 50. The housing 12 of the tool 10 is further supported by a backing plate 77 extending upwardly and outwardly from collar 66. The shape of the backing plate conforms to a shape of the housing 12 of the tool 10. To that end, the backing plate 77 of the present embodiment is curved. During use when the tool 10 is coupled with the handle attachment 50, the backing plate 77 is positioned in between the housing 12 of the tool 10 and the handle portion 53. The curvature of the curved backing plate 77 is substantially similar to the curvature of the housing 12 of the tool 10. In this manner, the handle attachment 50 may be relatively securely coupled to a rotary cutting tool at a single attachment location. The configuration of the handle attachment 50 and in particular the coupling mechanism enables the rotary tool 10 and the handle attachment 50 to withstand greater stress and strain during use. While particular devices and mechanisms are shown in the Figures as means to secure the handle attachment 50 to a rotary cutting tool, other types of mechanisms or devices may be used according to alternative embodiments.

The handle attachment 50 is also coupled to an attachment base plate 100 for coupling to the rotary cutting tool 10 and the handle attachment 50. The attachment plate comprises a base 120 for positioning on a working surface. The base 120, includes a first foot portion 122 spaced away from a second foot portion 124 for supporting the base 120 on the working surface. The first foot portion 122 and the second foot portion 124 lie in a plane that is parallel to the plane of the working surface upon which the base attachment is positioned. Each of the first foot portion 122 and the second foot portion 124 is provided with clamping screws 128 and 123 respectively. The clamping screws 128 and 123 may be used for securing the base 120 to the working surface by way of being clamped on to a guide plate (not shown). An arcuate U-shaped connecting portion 125 extends between the first foot portion 120 and the second foot portion 122. The arcuate portion 125 is advantageously curved outwardly away from the plane of the first foot portion 122, the second foot portion 124 and the plane of the working surface (not shown). The arcuate connecting portion 125 is therefore elevated in relation to the base 120. A coupling member in the form of a connecting shaft 127 couples the base attachment 100 to the handle attachment 50. The connecting shaft 127 is configured to enable sliding movement of the handle attachment 50 between an extended and a retracted position relative to the base attachment 100. The connecting shaft 127 is received into a shaft aperture 169 that is provided in a bottom face of the upright member 54 of the handle attachment. The connecting shaft 127 is attached to an arcuate shaped shaft plate 129. The curvature of the shaft plate 129 is adapted to be flush with the upper surface of the arcuate portion 125. Advantageously, the arcuate portion 125 is provided with an arcuate groove 137 that generally extends in a direction from the first foot portion 122 to the second foot portion 124. The angle between the connecting shaft 127 with reference to the plane of the working surface and/or the plane of the first foot portion 122 and the second foot portion 124 is adjustable by moving the shaft plate 129 along the curvature of the arcuate portion 125. The angular position of the connecting shaft 127 can be locked into position by using a fastener such as a hex-head screw 135 that is passed through the groove 137 at any particular position along the groove 137 and secured into the shaft plate 129. A backing plate 134 is also positioned in between the hex-head screw 135 and the arcuate portion 125 to further support the connecting shaft 127 to be held in position once the hex-head screw 135 is tightened in a fixed position to position the connecting shaft 127 at a designated angle in relation to the plane of the working surface. The shaft plate 129 is also provided with a plurality of locking notches 131. Once the angular position of the connecting shaft 127 is locked into position, a locking pin 133 engages any one of the locking notches 131. Each of the locking notches 131 that are provided along an edge of the shaft plate 129 and may also be utilized as a guide to designate specific angular positions of the connecting shaft 127. For example, the shaft plate 129 may include several notches 131 at 15° intervals relative to the curve of arcuate portion 125. Moving between successive notches 131 would enable the connecting shaft 127 to be fixed in positions at successive 15° offsets relative to vertical. For seven such notches 131, the connecting shaft 127 will be able to be secured at -45°, -30°, -15°, 0° (i.e. vertical or otherwise normal to plane of the foot 122 as shown), 15°, 30° and 45°.

Positioning the connecting shaft 127 at various designated angles by utilizing the attachment plate 100 and attaching the handle attachment 50 to the connecting shaft 127 enables the use of cutting tools such as (but not limited to) the rotary tool 10 coupled with the handle attachment 50 that enables drilling and cutting into a work piece at specific angles. For example, if an operator wishes to cut or drill into a work-piece at specific angles in relation to the plane of the working surface of the work-piece, the operator can position the connecting shaft 127 at the desired angle and lock the connecting shaft 127 into the desired angle using locking notch 131 and locking pin 133. Subsequently, the handle attachment 50 may be connected to the connecting shaft 127 by receiving the connecting shaft 127 into the shaft aperture 169. The tool 10 may be a rotary drill, such as a spiral drill, and may be coupled with the handle attachment 50 by way of the cutting tool coupling mechanism 60 as described in the preceding sections. Coupling the tool 10 with the handle attachment 50 that is also coupled with the base attachment plate 100 at a specific desired angle, is helpful because this comprises a tool system that positions the drill bit of the tool 10 at a substantially similar angle to the angle between the connecting shaft 127 and the working surface and enables the operator to drill or cut into the work-piece at the specific angles. Therefore, the operator is able to cut into the working surface at specific angles accurately without the issue of reducing ability of the operator while the tool is used for extended periods of time.

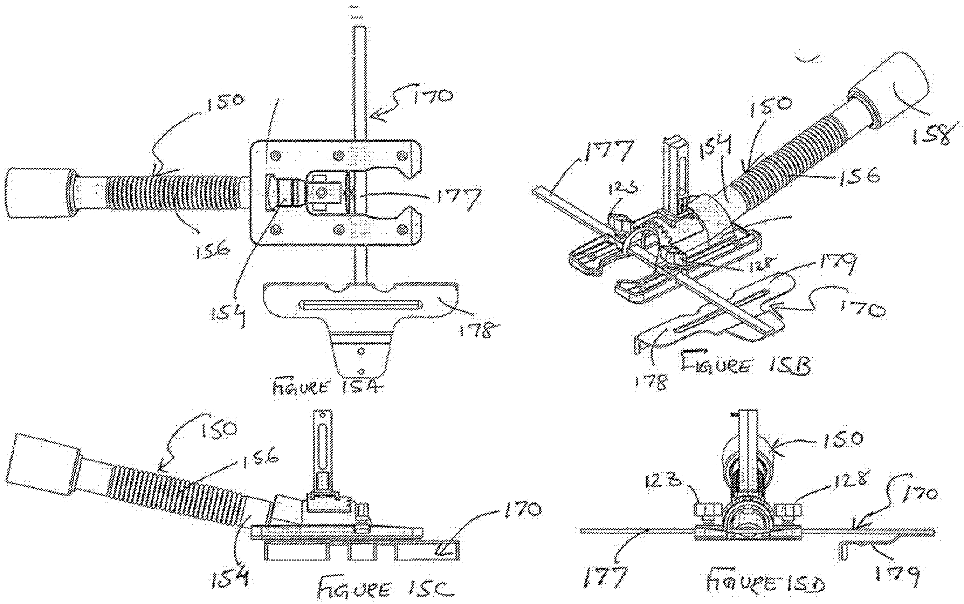

FIGS. 15A to 15D illustrates a dust collector or collection device 150 that may be coupled to the base plate attachment 100. The dust collection device comprises a conduit 156 that is connected at a rear end of the base portion 120 of the attachment plate. Advantageously, an opening of the conduit 126 may be positioned into a rear end of the arcuate connecting portion 125 into an aperture defined by a periphery of the arcuate connecting portion 125. The dust collector 150 is also adapted to be connected to a vacuum source so that the user can remove sawdust or other debris from a point of cut while the rotary cutting tool is in use.

The conduit 156 may have a size and shape configured to couple to an external dust collection device (e.g., a vacuum tube or other device) to pull debris away from the point of cut of the rotary cutting tool to which the attachment 100 is coupled. The dust collector device 150 may be coupled to the base attachment plate 100 by using any conventional method. According to an exemplary embodiment, the dust collector 150 includes features such as a snap fitting retainer 154 positioned in the aperture that provides relatively quick and simple attachment of the dust collector device 150 to the base plate attachment 100 (e.g., a snap-fit or other suitable means to couple the dust collector device 150 to the base plate attachment without the use of tools).

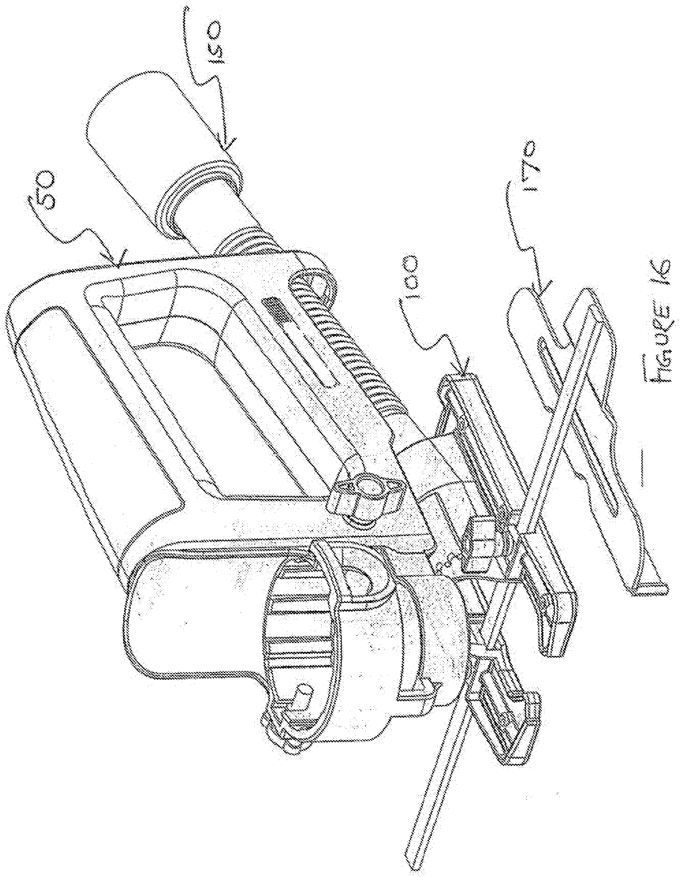

FIGS. 15A to 15D and 16 also illustrate an edge guide 170 that includes an elongated member 177 (e.g., a bar or shaft, etc.) and a body portion 178 having a face 179 that is configured to abut an edge of a workpiece. The edge guide 170 may be coupled to the base plate 100 attachment by clamping the clamping screws 123 and 128 onto the elongate member 177. The face 179 of the body portion 178 abuts an edge of a workpiece while the rotary cutting tool 10 (not shown) and base plate attachment 100 are moved laterally along the surface of the workpiece (not shown). In this manner, the edge guide limits the distance the rotary tool may be moved away from the edge of the workpiece, thereby enabling a user of the tool to form a relatively straight cut at a fixed distance from the edge of the workpiece.

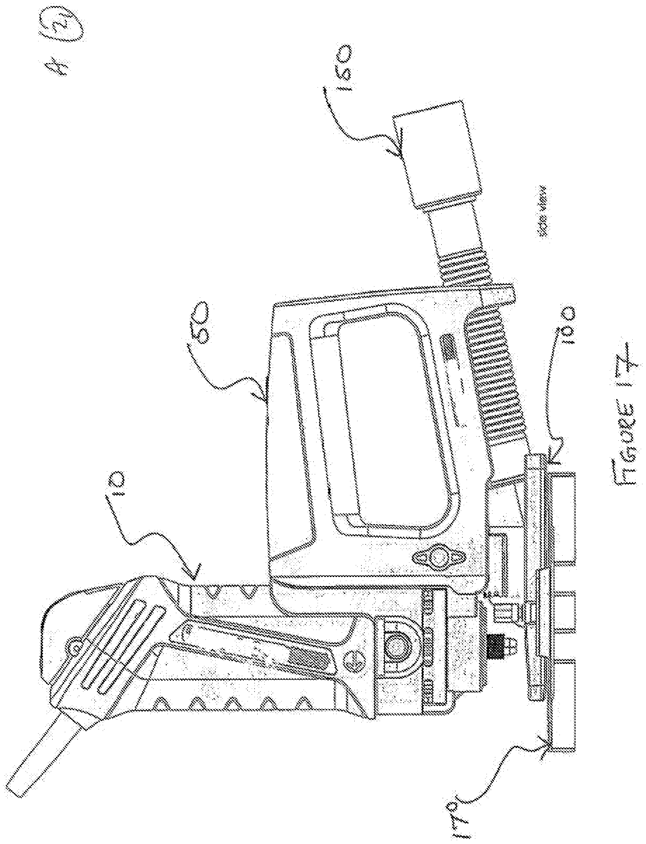

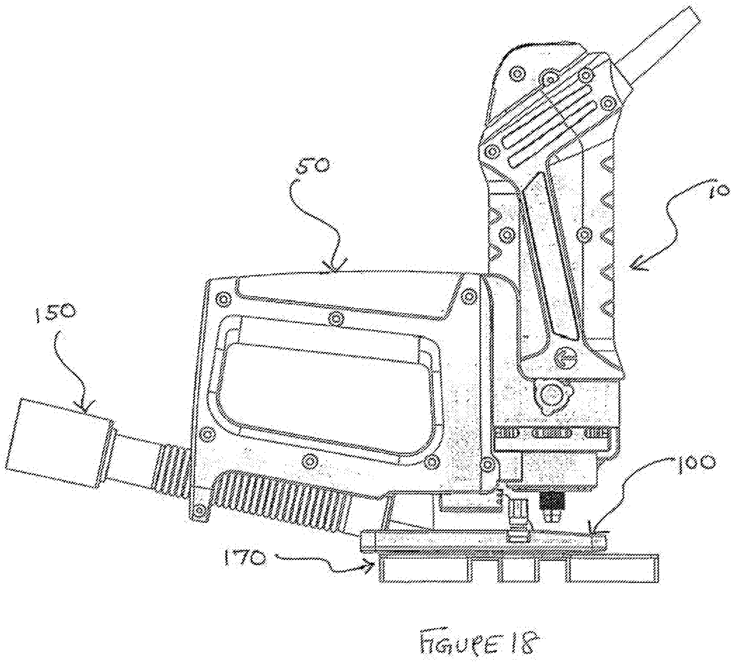

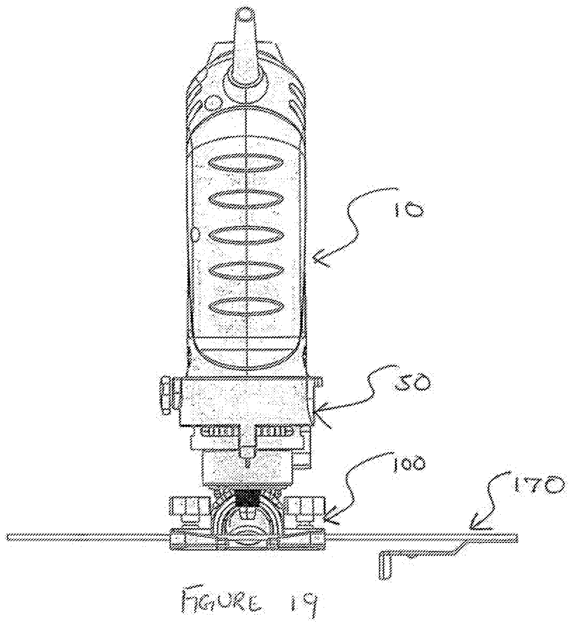

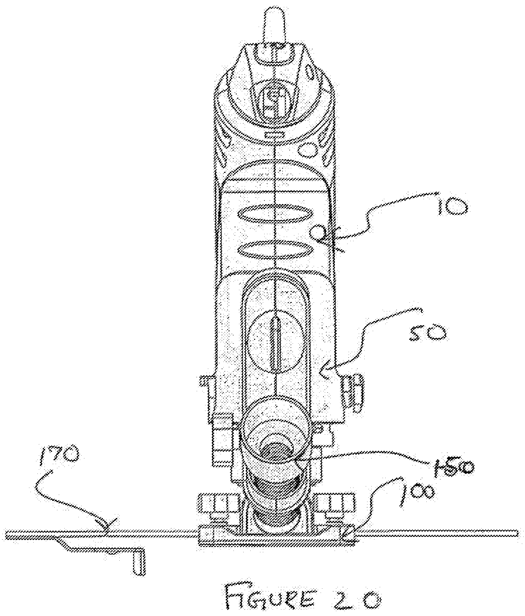

Figures 17 to 20 denote a fully assembled rotary tool system comprising the attachments that have been described in great detail in the preceding sections. The rotary tool system illustrated in Figures 17 to 20 comprises a rotary tool 10 coupled with a handle attachment 50. The handle attachment 50 is shown to be in turn coupled with the base plate attachment 100. Figures 17 to 20 also illustrate the edge guide 170 being clamped with the base plate attachment 100.

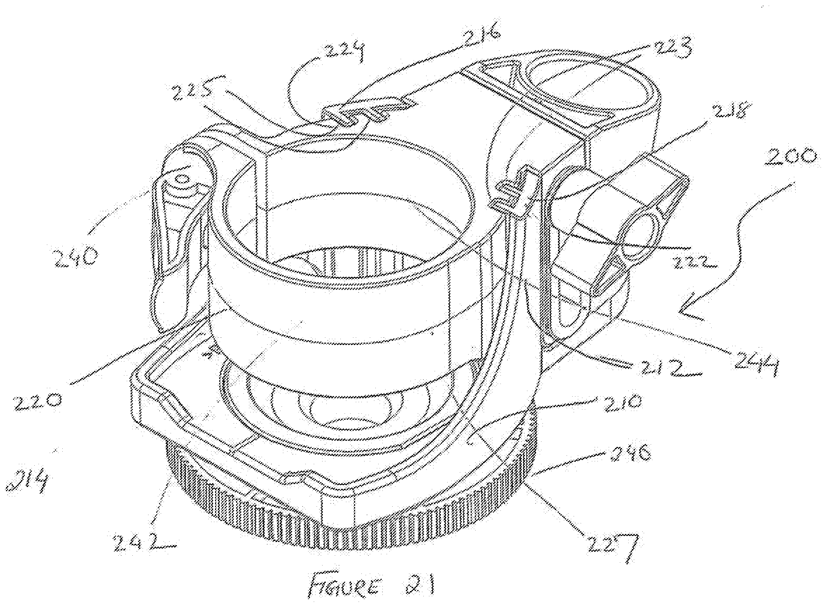

Referring to Figure 21 a removable depth guide 200 is shown. The removable depth guide, generally designated 200, includes a bracket collar 220 and a base plate 240. Base plate 240 is annular in form and a guide portion 210 is attached to the base plate 240. The base plate 240 and the guide portion 210 may be adjusted with respect to the bracket collar 220 depending on the desired depth of penetration of a cutting bit mounted on a cutting tool received in the bracket collar 220. The guide portion 210 indudes upstanding walls 212 and 214 that each form engaging jaws 218 and 216 respectively. The engaging jaws 218 and 216 are positioned to engage the bracket collar 220 at engagement positions 222 and 224 respectively. Each of the engaging jaws 218 and 216 are provided with a pair of ribs 223 and 225 respectively. Advantageously, each of the pairs of the ribs 223 and 225 are configured to be received in complementary channels 226 and 228 that are provided on an outer wall 227 of the bracket 220.

When it is desired to mount the bracket collar (with or without the base plate attached) to the tool, the bracket collar is held in substantially coaxial relationship with the front portion of the housing 12 of the cutting tool 10. Once the bracket collar 220 has been pushed against the connecting sleeve or cylindrical formation 13, the cutting tool 10 may be rotated in a clockwise direction. The spring collar formation 240 includes two collar parts 242 and 244 that lock into each other by a locking mechanism for releasably holding the bracket collar 220 to the cylindrical formation 13 of the tool, The locking mechanism fastens the collar parts 242 and 244 to hold the bracket collar 220 in register with the housing 12 of the tool 10. Accordingly, it is seen that the present disclosure provides a depth guide assembly permitting the depth guide to be readily and easily attached to and removed from the housing of the cutting tool, all without the use of fasteners or separate tools.

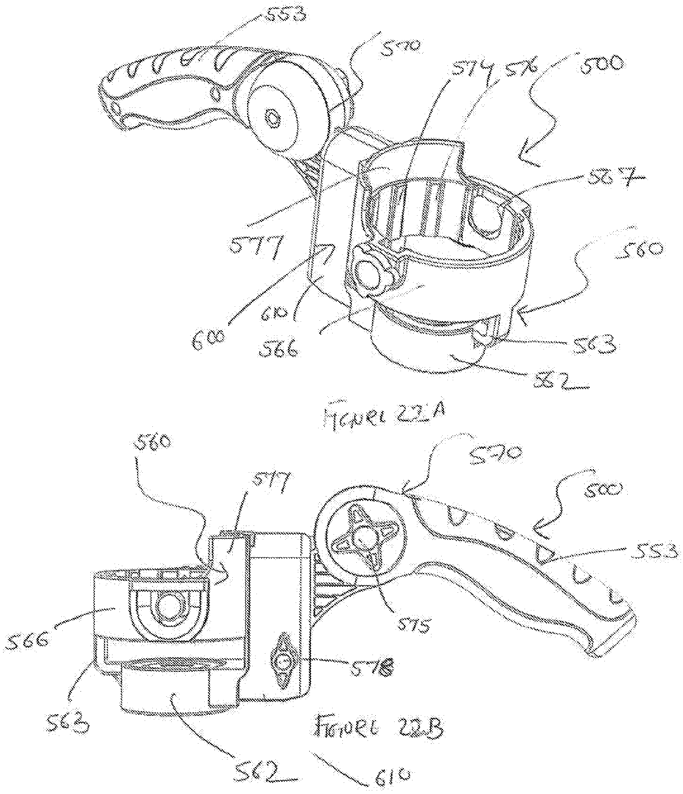

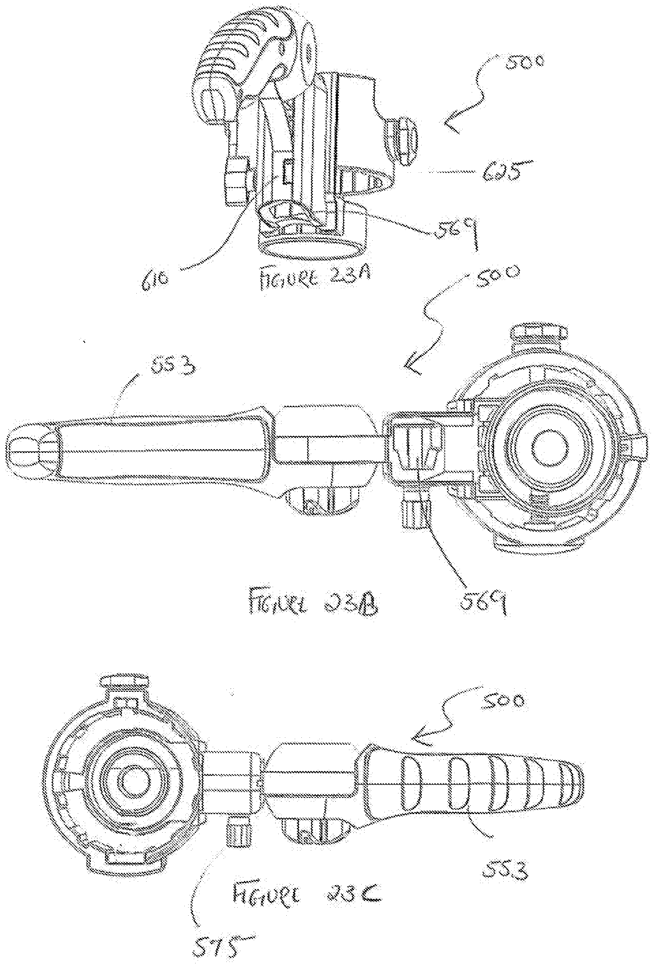

Figures 22 to 27 relate to an adjustable handle attachment 500. As more clearly shown in Figures 22 through to 25, the adjustable handle, attachment 500 includes a handle portion 553 and a coupling portion 560 for coupling or securing the adjustable handle attachment 500 to the cutting tool (e.g., a hand-held rotary cutting or cutout tool, etc.). The handle portion 553 includes a gripping surface and may be gripped by a user of the adjustable handle attachment such that, during use, the palm of an operator is positioned on the gripping surface and the fingers of the user wrap around the handle portion 553 to grip the handle attachment 500.

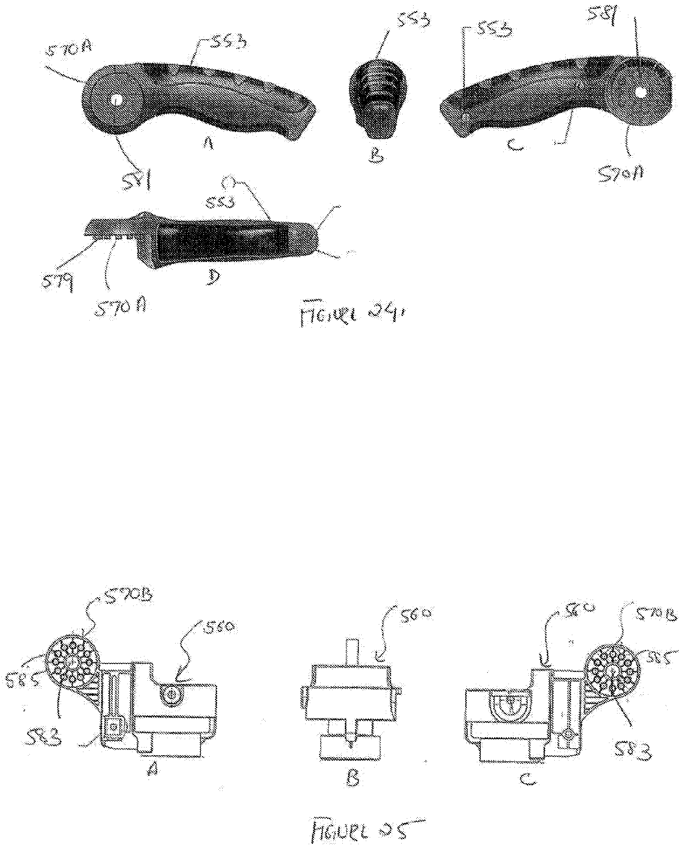

The coupling portion 560, as shown in Figures 25A to 25C, may comprise a single Integral piece of material. This ensures structural rigidity and efficient and controlled transferral of force from the handle attachment 500 to the tool 10 and baseplate 100.

The tool coupling portion 560 comprises a primary collar 566 that may be coupled to the housing 12 of the cutting tool 10 to secure the tool coupling portion 560 to the cutting tool 10. The primary collar 566 is provided with a locking aperture 567 that is adapted to receive a locking pin in the form of a retractable pin 69 that is provided on a front portion of the housing 12 of the tool 10.

During a routine coupling operation, a front portion 13 of the housing 12 of the tool 10 is received into the primary collar 566. Guiding channels 574 and 576 are also provided on an inner wall of the collar 566 and are positioned to receive guiding projections in the form of ribs 71 and 73 located on the outer wall of the front portion of the housing 12. Provision of the guiding channels 574 and 576 assists in preventing the tool 10 from moving relative to the collar 566 whilst the cutting tool 10 is in operation.

An aperture 567 is formed through the collar 566, for accessing a retractable locking pin 69 provided on the tool housing 12. As previously described, the locking pin 69 is adapted to be pushed inwards by a user's finger. Pushing the locking pin 69 inwards locks the spindle of the motor of the cutting tool 10. Once locked, the collet nut 28 can be loosened (e.g. using a spanner) and the cutting piece of the tool 10 can be removed and exchanged.

The coupling portion 560 is also provided with a secondary collar portion 562 for receiving a nose portion 14 of the tool housing 12. As discussed in the preceding sections, the nose portion 14 is located adjacent to the bit retaining structure 26 of the cutting tool 10 and is smaller in diameter in comparison with the front portion 13 of the tool housing 12. The secondary collar 562 and the primary collar 566 are also connected by a collar connector 563. A curved backing plate 577 extends upwardly from the primary collar 566 and is positioned to support an outer wall of the coupled cutting tool 10. The curvature of the curved backing plate 577 is substantially similar to the curvature of the housing 12 of the tool 10. In this manner, the adjustable handle attachment 500 may be relatively securely coupled to a rotary cutting tool 10.

The adjustable handle attachment 500 comprises a locking mechanism for looking the handle portion in a desired position and that is releasable to enable movement of the handle portion to another another. The locking mechanism is presently embodied by angular adjustment mechanism 570 for adjustment of the orientation of the handle portion 553 in several distinct angular orientations with reference to a longitudinal axis of the cutting tool 10 (i.e. when coupled with the coupling portion 560). The angular adjustment mechanism 570 comprises an end 570A of the handle portion 553, bracket 570B, and a actuator in the form of a thumb screw 575. The handle portion 553 at end 570A is rotatably mounted onto a handle mounting bracket 570B that is provided on a side wall of the coupling portion 560. The end 570A is secured to the handle mounting bracket 570B by a fastener in the form of a thumb screw 575.

The handle 553 is configured to be used in several different orientations. For example, in one working configuration the handle 553 may be oriented parallel to the cutting tool 10 coupled with adjustable handle attachment 500. In another working configuration, the handle 553 may be oriented perpendicular in relation to the cutting tool 10, The perpendicular configuration of the handle portion 553 enables the attachment 500 to be used for jig-saw applications. However, a perpendicular orientation may not be very useful when a user needs to make a curved cut onto a working surface in a confined or limited working space around the cut. The handle attachment 500 addresses this issue by providing a parallel orientation for the handle portion 553. Therefore, the handle attachment allows a user to cut tight curves in confined spaces. Further, the handle attachment 500 also assists in using the cutting tool 10 with more convenient hand placement, possibly allowing a user to make smoother, more precise cuts.

Referring specifically to Figures 24 and 25, it can be seen that the adjustable handle support 500 comprises a handle portion 553 that is attached to the coupling portion 560 by a rotating joint that forms the angular adjustment mechanism. The end 570A of the handle portion 553 is circular in shape and comprises circumferentially arranged projections 579 that are arranged around a centrally located aperture 581.

The handle portion 553 is mounted onto the collar portion 560 at the handle mounting bracket 570B. The handle mounting bracket 570B is of a complementary configuration to engage with end 570A of the handle portion 553 and, together with thumb screw 575, thereby provide the rotating joint. Specifically, the handle mounting bracket 570B is circular in shape and comprises a centrally located aperture 583. The aperture 583 is surrounded by circumferentially arranged recesses 585 that are positioned to engage the circumferential projections 579 of the handle portion 553. The projections 579 are arranged at equivalent angular spacing of approximately 30° from each other with reference to the central aperture 581. Similarly, the recesses 585 are also arranged at equivalent angular spacing of 30° from each other with reference to the central aperture 583.

In a typical assembly, the end 570A is mounted onto the handle mount 570B and a thumb screw 575 is received into apertures 581 and 583. The projections 579 are sized and positioned to be received into recesses 585 provided on the handle mount. Tightening of the thumb screw 575 results in the projection 579' snapping into, or otherwise being received in, the recesses 585 and thereby locking the handle portion 553 in position.

It will be appreciated that the handle portion 553 may be mounted at several different orientations ranging from a parallel orientation in which the handle portion 553 is substantially parallel to the longitudinal axis of the coupled tool 10 to a perpendicular orientations in which the handle portion 553 is arranged perpendicular to the longitudinal axis of the cutting tool 10. The handle portion 553 may also be oriented at several different angles in relation to the longitudinal axis of the coupled tool ranging from 0° to 90° with 30° angular increments. The angularly spaced projections 579 and recesses 585 are provided so as to snap into each other in the multiple orientations when the thumb screw is tightened thereby assisting in locking the orientation of the handle at a desirable position.

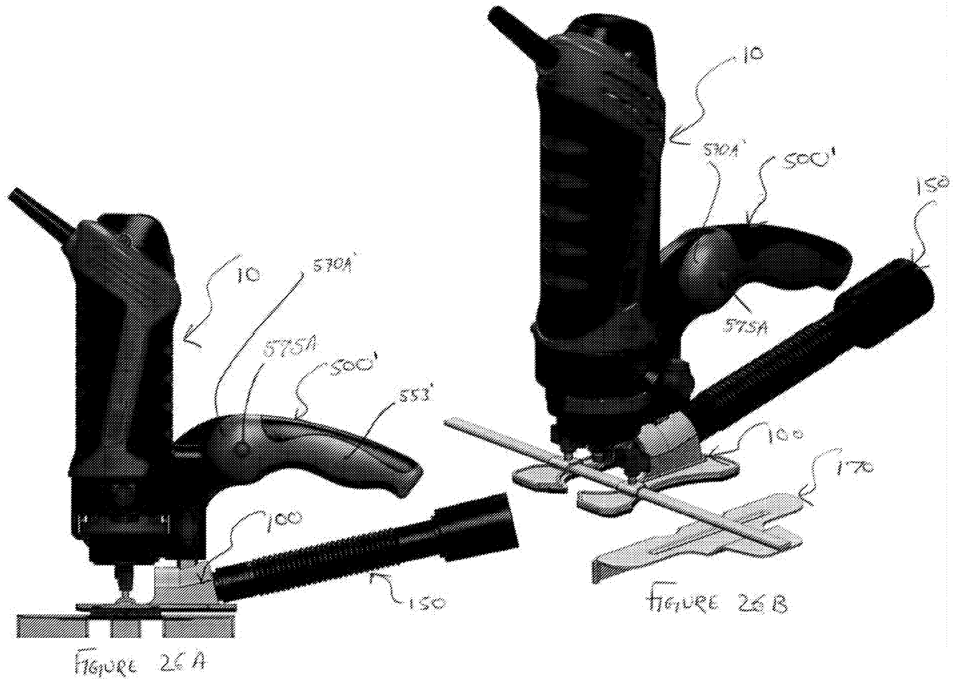

The handle portion 553, shown in Figures 24A to 24D- similar to handle attachment 500', shown in Figures 26A to 26C - is curved from end 555 to and 557. When in position as shown in Figures 22A and 22B, the curve of the handle portion 553 curves 'towards' the workpiece. In other words, the palm grip 559 faces upwards and the finger grip 581 faces downwards. This position may be suitable, for example, for applications where the cutting tool 10 is a drill or where the workpiece is elevated.

The handle portion 553 may alternatively be rotated through 180°, and secured so that the curve of the handle portion 553 curves 'away' from the workpiece. In other words, the palm grip 559 faces downwards and the finger grip 561 faces upwards. This position may be suitable, for example, for applications where the cutting tool 10 is a jigsaw and/or where the operator is above the cutting tool 10 when using the cutting tool 10. It will be appreciated that the same variability in angle of the handle portion 553 may be achieved with the curve of the handle portion 553 curving 'away' from the workpiece.

Whether the handle portion 553 curves 'towards' or 'away' from the workpiece, the thumb screw 575 is still able to be inserted through the aligned apertures 581, 583 and tightened to secure the handle portion 553 in position.

In an alternative embodiment, the thumb screw 575 may also be replaced by an actuator such as a spring loaded pin 575A. The spring loaded pin 575A, upon actuation, may assist in adjusting orientation of the handle portion 553 with reference to the longitudinal axis of the cutting tool.

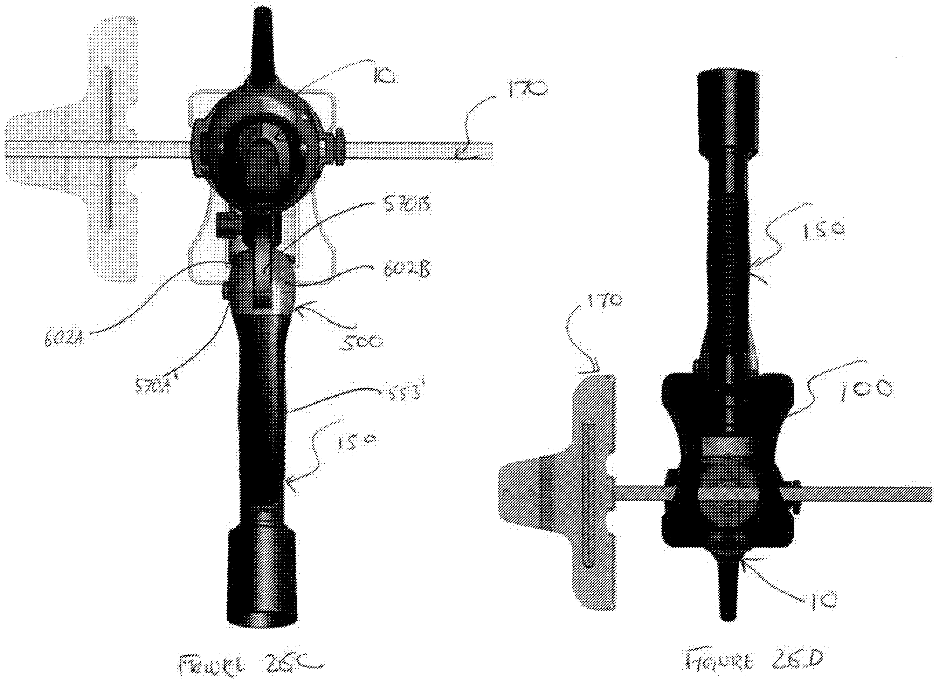

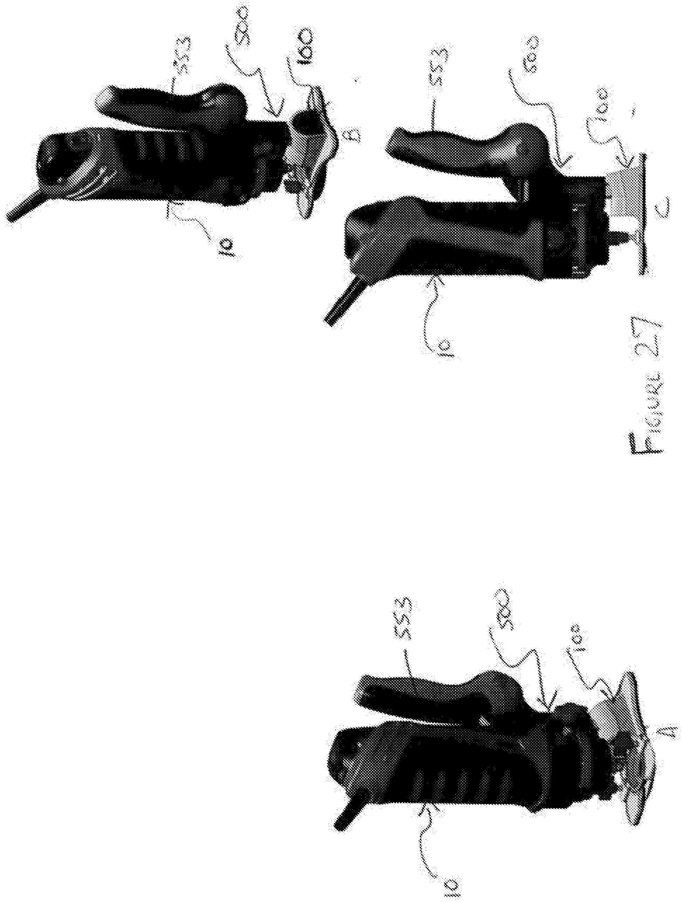

Referring to Figures 26 and 27, the adjustable handle attachment 500 is also coupled to the attachment base plate 100 by a base attachment mechanism 600. The base attachment mechanism comprises a sleeve 610 that is sized for receiving the connecting shaft 127 of the base plate attachment.

In order to couple the adjustable handle attachment 500 with the base attachment plate 100, the connecting shaft 127 is received into the sleeve 610 from the shaft aperture 569. The sleeve 610 also provides a depth adjustment mechanism by allowing for fastening of the connecting shaft 127 along several different positions within an inner wall of the sleeve 610. Specifically, a thumb screw 578 may be fastened through an aperture provided on the sleeve 610 into a position along the length of the elongate slot 136 provided on the connecting shaft 127. Such an arrangement allows for the cutting tool to be used at varying depths with reference to a working surface by fastening the thumb screw 578 at several positions in the vertical slot of the shaft 127. A depth indicator window 625 is also provided on the sleeve that allows a user to view indicia such as markings on the shaft 127 provided on the connecting shaft 125 and thereby determine the depth at which the cutting tool 10 is being used.

Figures 26A to 26D and Figures 27A to 27C denote a fully assembled rotary tool system comprising the attachments that have been described in detail in the preceding sections. The rotary tool system illustrated in Figures 26A to 26D comprises a rotary tool 10 coupled with an adjustable handle attachment 500' similar to adjustable handle attachment 500 described above in relation to Figures 24A to 24D. The handle attachment 500' is also shown to be coupled with the base plate attachment 100. Figures 26A to 26D also illustrate the edge guide 170 being clamped with the base plate attachment 100.

Figures 26A to 26D show the handle portion 553' in a perpendicular orientation with reference to the longitudinal axis of the cutting tool 10. Figures 27A to C show the handle portion 553' in a parallel orientation with reference to the longitudinal axis of the cutting tool 10.

While operation of the adjustable handle attachment 500' of Figures 26A to 26D is essentially the same as that of the adjustable handle attachment 500 of Figures 24A to 24D, there are some structural differences between the handle attachments 500, 500' themselves. Adjustable handle attachment 500 of Figures 24A to 24D has an end 570A constituting part of an angular displacement mechanism 570. End 570A attaches to one side of the mounting bracket 570B of the coupling portion 560. Since the end 570A attaches to only one side of the mounting bracket 570B, the load applied through the adjustable handle attachment 500 to the mounting bracket 570B and consequently to the base plate 100' may be asymmetrical.

By way of contrast, the adjustable handle attachment 500' of Figures 26A to 26D includes a modified end 570A'. The modified end 570A' includes a pair of opposed spherical caps or domes 602A, 602B that taper towards handle portion 553' (best seen in Figure 26C) - these domes 602A, 602B replace the end 570A of the handle portion 553 in the angular adjustment mechanism 570. Domes 602A, 602B clamp against the mounting bracket 570B on both sides of the mounting bracket 570B. Thus a load applied to the adjustable handle attachment 500' is consistent on both side of the mounting bracket 570B and is thus uniformly applied through the coupling portion 560 to the base plate 100'. This configuration provides both a stronger handle attachment 500' when compared with handle attachment 500, and can enable a more consistent directional application of force through the base plate 100' onto a workpiece thus enabling better control of the tool 10.

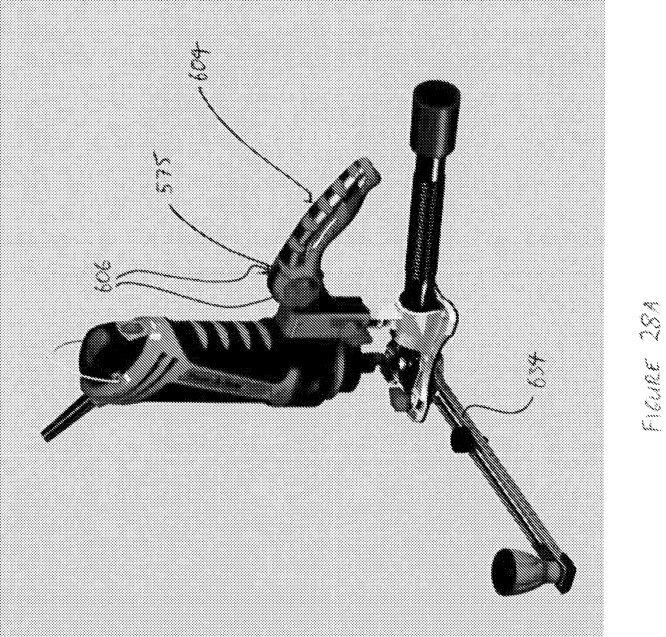

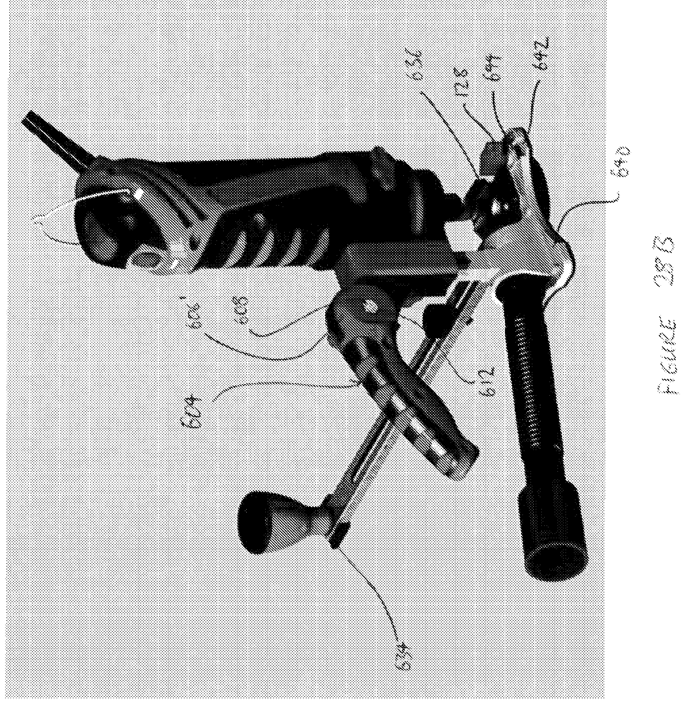

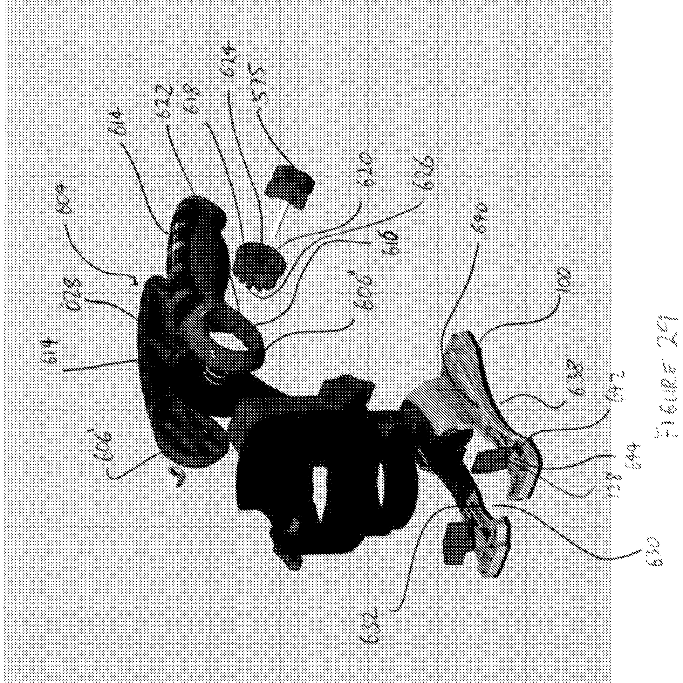

A similar adjustable handle attachment to that shown in Figures 26A to 26C is designated by reference numeral 604 in Figures 28A and 28B and 29. The domes 602A, 602B of Figures 26A to 26C have a dome-shape since a push button 575A is provided. Since the embodiment of Figures 28A, 28B and 29 employs a thumb screw 575, the ends 606 are flat-topped so as to create friction with the thumb screw 575, thereby preventing unintentional rotation of the thumb screw 575.

The thumb screw 575 screws into a nut 608 as shown in Figure 28B. The nut 608 is hexagonal and fits within a counter-sunk hexagonal recess 612 in the end 606 of the adjustable handle attachment 604. The nut 608 is thereby prevented from rotation as the thumb screw 575 is screwed into the nut 608.

The adjustable handle attachment 604 may be formed from rigid plastics. In order to separate the teeth (i.e. projections 579) of the adjustable handle attachment 604 from the corresponding teeth (i.e. recesses 585) of the mounting bracket 570B the opposed halves 614 (see Figure 29) of the adjustable handle attachment 604 would need to flex apart at ends 606. This is undesirable as it limits the type of materials from which adjustable handle attachment 604 can be formed, since a degree of flex is necessary, and can lead to premature fatigue in the adjustable handle attachment 604.

To avoid the issue of premature fatigue, the two ends 606 of the adjustable handle attachment 604 are differently configured. One end 606' includes a recess 612 for receiving a nut 608 as described above in relation to Figure 28B. The opposed end 606" as shown in Figures 28A and 29 includes a large aperture 616. The aperture 616 is keyed, with a plurality of circumferentially disposed recesses 622 extending towards the opposite end 606' generally parallel to the axis of the thumb screw 575 when the adjustable handle attachment 604 is assembled onto the mounting bracket 570B.

A plug 618 fits into the aperture 616. The plug 618 is similarly keyed, with a plurality of circumferentially disposed ribs 624. The ribs 624 of the plug 618 are received in the recesses 622 when the adjustable handle attachment 604 is assembled. Thus the plug 618 is fixed from rotating relative to the end 606".

The plug 618 further includes an aperture 620 through which the thumb screw 575 extends when in use.

Rather than providing projections 579 on the end 606" as described in relation to the adjustable handle attachment 500 of Figures 24A to 24D, the teeth or projections 626 of the present handle attachment 604 are provided on the plug 618. Some of the teeth or projections 626 may constitute inwardly extending ends of the ribs of the plug 618. The teeth or projections 626 grip the mounting bracket 570B as described above in relation to the embodiment of Figures 24A to 24D.

The plug 618 is biased by a biasing element, presently spring 628, away from the mounting bracket 570B. As the thumb screw 575 is tightened into the nut 608 the bias of the spring 628 is overcome and the plug 618 is drawn into the aperture 616. Thus the ribs 624 slide within recesses 622 and thereby fix the relative positions of the plug 618 and end 606". Once the thumb screw 575 has been fully tightened into the nut 608, the teeth 626 are received in the recesses 585 of the mounting bracket 570B to fix the handle attachment 604 in position on the mounting bracket 570B.

To adjust the position of the handle attachment 604 on the mounting bracket 570B the thumb screw 575 is loosened. The spring 628 forces the plug 618 outwardly with the thumb screw 575, away from the mounting bracket 570B. Thus the teeth 626 are retracted from the recesses 585, allowing the handle attachment 604 to rotate relative to the mounting bracket 570B. Since the ribs 624 remain within the recesses 622, the handle attachment 604 can be rotated without the plug 618 being entirely removed from the aperture 616, and without the ends 606', 606" having to flex away from each other.

The base plate 100' includes a generally circular recess 630, as shown in Figure 29. The recess includes a circle cutter mount, comprising circumferential rib 632, to which a circle cutter 634 (see Figures 28A and 28B) can be mounted. The circle cutter includes a disc-shaped end 636 that fixes to the cutter mount 632. In the embodiment shown in Figure 28B, the end 636 of the circle cutter 634 comprises two opposed disc-shaped clamping elements. One of the clamping elements is positioned on top of the cutter mount 632, and the other clamping element is positioned beneath the cutter mount 632 in a clearance that exists between the cutter mount 632 and workpiece when the tool 10 is in use. The two clamping elements of the end 636 are tightened together to clamp onto the cutter mount 632 thereby holding the circle cutter 634 in position. Depending on the degree to which the clamping elements of the end 636 have been tightened onto each other, the end 636 may be able to rotate in the recess 630.

Due to the presence of recess 630 and scallops 638, the legs 640 of the base plate 100' are significantly wider at their ends than in the middle where the recess 630 and scallops 638 are located. This can result in a significant weakening of the legs 640 and thus a weakening of the base plate 100'.

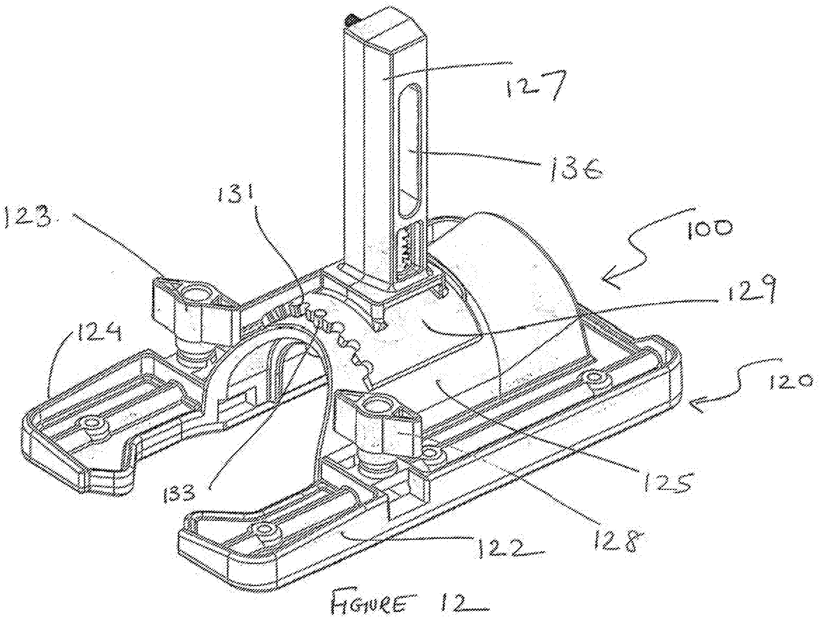

To strengthen the base plate 100', when compared with base plate 100 of Figure 12, the mounts 644 for the clamping screw 128 have been shifted forwardly of the base plate 100', to the wider portion of the legs 640. Consequently, the guide apertures 642 for the edge guide 170 are shifted forwardly of the legs 640 and pressure placed on the edge guide 170. If the guide aperture 642 are not moved forwardly of the legs 640, and were instead maintained in a comparatively rearward position as shown in Figure 12, they would substantially weaken the legs 640 in the region of the recess 630 and scallops 638.

It will be understood to persons skilled in the art that many modifications may be made without departing from the scope of the present disclosure.

In the claims which follow and in the preceding description, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments.

## Claims

1. A handle attachment (500) for a cutting tool (10) that has a nose portion (14) that is smaller in cross-section than a housing portion (12) of the tool (10), with the nose portion (14) being located forwardly of the housing portion (12), the handle attachment (50) comprising:
a handle portion (553) for gripping by a user and moveable to a desired position relative to the cutting tool (10);
a coupling arrangement (560) for coupling the handle portion (553) to the cutting tool (10); and
a locking mechanism (570) for locking the handle portion (52) in the desired position and being releasable to enable movement of the handle portion (553) to another position relative to the cutting tool (10);
a base (100) for placement relative to a working surface, and an adjustable base attachment mechanism (600) for adjustably connecting the base (100) to the coupling arrangement (560), wherein the base attachment mechanism (500) is arranged to allow for adjusting a distance between the nose portion (14) of the retained cutting tool (10) and the working surface; **characterised in that**
the base attachment mechanism (600) comprises a sleeve (610) disposed between the handle portion (553) and the coupling portion (560), and a shaft (127) mounted to base (100), the shaft (127) being adjustably mounted within the sleeve (610) to allow for adjusting the distance between the nose portion (14) of the retained cutting tool (10) and the working surface.

2. A handle attachment (500) according to claim 1, wherein the coupling arrangement (560) comprises:
a first collar portion (566) for receiving and retaining the housing portion (12) of the cutting tool (10); and
a second collar portion (562) that is smaller in cross-section than the first collar portion, the second collar portion (562) for receiving and retaining the nose portion (14) of the cutting tool (10).

3. A handle attachment (500) in accordance with either claim 1 or claim 2, further comprising a fastening arrangement (578) for fastening the shaft (127) within the sleeve (610) of the base attachment mechanism (600).

4. A handle attachment (500) in accordance with any one of the preceding claims, wherein the fastening arrangement (578) is in the form of a thumb screw (578) that is fastened through an aperture of the sleeve (610) and engageable with the shaft (127) of the base.

5. A handle attachment (500) in accordance with any one of the preceding claims, further comprising a depth indicator window (625) disposed on the sleeve (610), and indicia disposed on the shaft (127), the window (625) allowing for a user to view the indicia to thereby determine a depth of the cutting tool (10).

6. A handle attachment (500) in accordance with any one of the preceding claims, wherein the locking mechanism (570) releasably locks the handle portion (553) selectively in each of a plurality of positions relative to the coupling arrangement (600).

7. A handle attachment (500) in according to any one of the preceding claims, wherein each position of the handle portion (553) is an angular orientation of the handle portion (553) relative to the coupling arrangement (600).

8. A handle attachment (500) in accordance with any one of the preceding claims, wherein, in one position, the handle portion (553) is substantially perpendicular to the longitudinal axis of the cutting tool (10), and wherein, in another position, the handle portion (553) is substantially parallel to the longitudinal axis of the cutting tool (10).

9. A handle attachment (50) in accordance with claims 8, wherein the handle portion (52) is able to be selectively positioned between the parallel and perpendicular orientations at one of a plurality of discrete positions.

10. A handle attachment (500) according to claim 8, wherein the handle portion (553) is able to be positioned at variable positions between the parallel and perpendicular orientations.

11. A handle attachment (500) according to any one of the preceding claims, wherein the handle includes a grip and is attachable to the coupling arrangement (600) in a first condition, whereby the grip faces away from a workpiece when the handle attachment (500) is in use, and a second condition, whereby the grip faces towards the workpiece when the handle attachment (500) is in use.

12. A handle attachment (500) according to claim 11, wherein in the second condition the handle portion (553) is upside down with respect to the position of the handle portion (553) when in the first condition.

13. A handle attachment (500) according to any one of the preceding claims, further comprising a depth guide (200), the depth guide (200) comprising:
a depth guide base (240) for placement relative to a working surface;
a guide (210) positioned in between a collar (220) for receiving a cutting tool and the depth guide base (240) and for engaging the collar (220) to thereby locate the depth guide base (240) relative to the collar (220); and
a depth adjustment mechanism for adjusting a distance between the collar (220) and the depth guide base (240), said mechanism being engaged with the collar (220) and moveable relative to the collar (220) to change a height of the tool relative to the working surface.

## Patentansprüche

1. Haltebefestigung (500) für ein Schneidwerkzeug (10), das einen Nasenteil (14) aufweist, der im Querschnitt kleiner ist als ein Gehäuseteil (12) des Werkzeugs (10), wobei der Nasenteil (14) vor dem Gehäuseteil (12) angeordnet ist, und wobei die Haltebefestigung (50) umfasst:
einen Halteteil (553) zum Greifen durch einen Benutzer und in eine gewünschte Position relativ zu dem Schneidwerkzeug(10) bewegbar;
eine Kopplungsanordnung (560) zum Koppeln des Halteteils (553) an das Schneidwerkzeug (10); und
einen Verriegelungsmechanismus (570) zum Verriegeln des Halteteils (52) in der gewünschten Position und der lösbar ist, um eine Bewegung des Halteteils (553) in eine andere Position relativ zu dem Schneidwerkzeug (10) zu ermöglichen;
eine Basis (100) zum Anordnen relativ zu einer Arbeitsfläche, und einen einstellbaren Basisbefestigungsmechanismus (600) zum einstellbaren Verbinden der Basis (100) mit der Kopplungsanordnung (560), wobei der Basisbefestigungsmechanismus (500) zum Erlauben eines Einstellens einer Entfernung zwischen dem Nasenteil (14) des gehalterten Schneidwerkzeugs (10) und der Arbeitsfläche angeordnet ist; **dadurch gekennzeichnet, dass**
der Basisbefestigungsmechanismus (600) eine zwischen dem Halteteil (553) und dem Kopplungsteil (560) angeordnete Hülse (610), und eine auf Basis (100) befestigte Welle (127) umfasst, wobei die Welle (127) in der Hülse (610) beweglich befestigt ist, zum Erlauben eines Einstellens einer Entfernung zwischen dem Nasenteil (14) des gehalterten Schneidwerkzeugs (10) und der Arbeitsfläche.

2. Haltebefestigung (500) nach Anspruch 1, wobei die Kopplungsanordnung (560) umfasst:
einen ersten Kragenteil (566) zum Aufnehmen und Haltern des Gehäuseteils (12) des Schneidwerkzeugs (10); und
einen zweiten Kragenteil (562), der im Querschnitt kleiner ist als der erste Kragenteil, zum Aufnehmen und Haltern des Nasenteils (14) des Schneidwerkzeugs (10).

3. Haltebefestigung (500) nach einem der Ansprüche 1 oder 2, weiter umfassend eine Befestigungsanordnung (578) zum Befestigen der Welle (127) in der Hülse (610) des Basisbefestigungsmechanismus (600).

4. Haltebefestigung (500) nach einem der vorstehenden Ansprüche, wobei die Befestigungsanordnung (578) in der Form einer Flügelschraube (578) ist, die durch eine Öffnung der Hülse (610) befestigt ist und mit der Welle (127) der Basis in Eingriff steht.

5. Haltebefestigung (500) nach einem der vorstehenden Ansprüche, weiter umfassend ein auf der Hülse (610) angeordnetes Tiefenanzeigerfenster (625), und auf der Welle (127) angeordnete Markierungen, wobei das Fenster (625) einem Benutzer erlaubt, die Markierungen zu sehen und dabei eine Tiefe des Schneidwerkzeugs (10) zu bestimmen.

6. Haltebefestigung (500) nach einem der vorstehenden Ansprüche, wobei der Verriegelungsmechanismus (570) lösbar den Halteteil (553) wahlweise in einer jeden einer Vielzahl an Positionen relativ zu der Kopplungsanordnung (600) verriegelt.

7. Haltebefestigung (500) nach einem der vorstehenden Ansprüche, wobei eine jede Position des Halteteils (553) eine Winkelausrichtung des Halteteils (553) relativ zu der Kopplungsanordnung (600) ist.

8. Haltebefestigung (500) nach einem der vorstehenden Ansprüche, wobei in einer Position der Halteteil (553) im Wesentlichen senkrecht zur Längsachse des Schneidwerkzeugs (10) ist, und in einer weiteren Position der Halteteil (553) im Wesentlichen parallel zu der Längsachse des Schneidwerkzeugs (10) ist.

9. Haltebefestigung (50) nach Anspruch 8, wobei der Halteteil (52) wahlweise in einer au seiner Vielzahl diskreter Positionen zwischen der parallelen und der senkrechten Ausrichtung positioniert werden kann.

10. Haltebefestigung (500) nach Anspruch 8, wobei der Halteteil (553) in variablen Positionen zwischen der parallelen und der senkrechten Ausrichtung positioniert werden kann.

11. Haltebefestigung (500) nach einem der vorstehenden Ansprüche, wobei die Haltebefestigung einen Griff umfasst und an der Kopplungsanordnung (600) in einem ersten Zustand anbringbar ist, in dem der Griff von einem Werkstück weg zeigt, wenn die Haltebefestigung (500) in Verwendung ist, und in einem zweiten Zustand anbringbar ist, in dem der Griff dem Werkstück zugewandt ist, wenn die Haltebefestigung (500) in Verwendung ist.

12. Haltebefestigung (500) nach Anspruch 11, wobei in dem zweiten Zustand das Halteteil (553) hinsichtlich der Position des Halteteils (553) in dem ersten Zustand umgedreht ist.

13. Haltebefestigung (500) nach einem der vorstehenden Ansprüche, weiter umfassend eine Tiefenführung (200), die Tiefenführung (200) umfassend:
eine Tiefenführungsbasis (240) zum Positionieren relativ zu einer Arbeitsfläche;
eine Führung (210) angeordnet zwischen einem Kragen (220) zum Aufnehmen eines Schneidwerkzeugs und der Tiefenführungsbasis (240) und zum Eingreifen des Kragens (220), um dabei die Tiefenführungsbasis (240) relativ zu dem Kragen (220) anzuordnen; und
einem Tiefeneinstellmechanismus zum Einstellen einer Entfernung zwischen dem Kragen (220) und der Tiefenführungsbasis (240), wobei der Mechanismus mit dem Kragen (220) in Eingriff steht und relativ zu dem Kragen (220) bewegbar ist, um eine Höhe des Werkzeugs relativ zu der Arbeitsfläche zu verändern.

## Revendications

1. Fixation de poignée (500) pour un outil de coupe (10) qui possède une portion en forme de nez (14) dont la section transversale est inférieure à celle d'une portion faisant office de carter (12) de l'outil (10), la portion en forme de nez (14) étant disposée à l'avant de la portion faisant office de carter (12), la fixation de poignée (50) comprenant :
une portion de poignée (553) destinée à être saisie par un utilisateur et mobile pour prendre une position désirée par rapport à l'outil de coupe (10) ;
un agencement d'accouplement (560) pour accoupler la portion de poignée (553) à l'outil de coupe (10) ; et
un mécanisme de verrouillage (570) pour verrouiller la portion de poignée (52) dans la position désirée et qui peut être libéré pour permettre le mouvement de la portion de poignée (553) en direction d'une autre position par rapport à l'outil de coupe (10) ;
une base (100) destinée à venir se placer par rapport à une surface de travail, et un mécanisme de fixation de base réglable (600) pour relier de manière réglable la base (100) à l'agencement d'accouplement (560), dans laquelle le mécanisme de fixation de base (500) est disposé pour permettre le réglage d'une distance entre la portion en forme de nez (14) de l'outil de coupe retenu (10) et la surface de travail ; **caractérisé en ce que**
le mécanisme de fixation de base (600) comprend un manchon (610) disposé entre la portion de poignée (553) et la portion d'accouplement (560), et un arbre (127) monté sur la base (100), l'arbre (127) étant monté de manière réglable au sein du manchon (610) pour permettre le réglage de la distance entre la portion en forme de nez (14) de l'outil de coupe retenu (10) et la surface de travail.

2. Fixation de poignée (500) selon la revendication 1, dans laquelle l'agencement d'accouplement (560) comprend :
une première portion en forme de bague (566) destinée à recevoir et à retenir la portion faisant office de carter (12) de l'outil de coupe (10) ; et
une seconde portion en forme de bague (562) dont la section transversale est inférieure à celle de la première portion en forme de bague, la seconde portion en forme de bague (562) étant destinée à recevoir et à retenir la portion en forme de nez (14) de l'outil de coupe (10).

3. Fixation de poignée (500) selon la revendication 1 ou 2, comprenant en outre un agencement de fixation (578) pour fixer l'arbre (127) au sein du manchon (610) du mécanisme de fixation de base (600).

4. Fixation de poignée (500) selon l'une quelconque des revendications précédentes, dans laquelle l'agencement de fixation (578) se présente sous la forme d'une vis à serrage manuel (578) qui est fixée à travers un orifice du manchon (610) et qui peut entrer en contact avec l'arbre (127) de la base.

5. Fixation de poignée (500) selon l'une quelconque des revendications précédentes, comprenant en outre une fenêtre d'indication de la profondeur (625) disposée sur le manchon (610), et des repères disposés sur l'arbre (127), la fenêtre (625) permettant à un utilisateur de visualiser les repères pour ainsi déterminer une profondeur de l'outil de coupe (10).

6. Fixation de poignée (500) selon l'une quelconque des revendications précédentes, dans laquelle le mécanisme de verrouillage (570) verrouille de manière amovible la portion de poignée (553) de façon sélective dans chaque position parmi une pluralité de positions par rapport à l'agencement d'accouplement (600).

7. Fixation de poignée (500) selon l'une quelconque des revendications précédentes, dans laquelle chaque position de la portion de poignée (553) représente une orientation angulaire de la portion de poignée (553) par rapport à l'agencement d'accouplement (600).

8. Fixation de poignée (500) selon l'une quelconque des revendications précédentes, dans laquelle, dans une position, la portion de poignée (553) est sensiblement perpendiculaire à l'axe longitudinal de l'outil de coupe (10), et dans laquelle, dans une autre position, la portion de poignée (553) est sensiblement parallèle à l'axe longitudinal de l'outil de coupe (10).

9. Fixation de poignée (50) selon la revendication 8, dans laquelle la portion de poignée (52) peut être positionnée de manière sélective entre les orientations parallèle et perpendiculaire à une position discrète parmi une pluralité de positions discrètes.

10. Fixation de poignée (500) selon la revendication 8, dans laquelle la portion de poignée (553) peut être positionnée à des positions variables entre les orientations parallèle et perpendiculaire.

11. Fixation de poignée (500) selon l'une quelconque des revendications précédentes, dans laquelle la poignée comprend un manche et peut venir se fixer à l'agencement d'accouplement (600) dans une première condition selon laquelle le manche se détourne d'une pièce à usiner lorsque la fixation de poignée (500) est utilisée, et une seconde position selon laquelle le manche est orienté vers la pièce à usiner lorsque la fixation de poignée (500) est utilisée.

12. Fixation de poignée (500) selon la revendication 11, dans laquelle, dans la seconde condition, la portion de poignée (553) est renversée par rapport à la position de la portion de poignée (553) dans la première condition.

13. Fixation de poignée (500) selon l'une quelconque des revendications précédentes, comprenant en outre un guide de profondeur (200), le guide de profondeur (200) comprenant :
une base de guide de profondeur (240) destinée à venir se placer par rapport à une surface de travail ;
un guide (210) disposé entre une bague (220) destinée à recevoir un outil de coupe et la base de guide de profondeur (240) et destiné à entrer en contact avec la bague (220) pour ainsi disposer la base de guide de profondeur (240) par rapport à la bague (220) ; et
un mécanisme de réglage de la profondeur pour régler une distance entre la bague (220) et la base de guide de profondeur (240), ledit mécanisme entrant en contact avec la bague (220) et étant à même de se déplacer par rapport à la bague (220) afin de modifier une hauteur de l'outil par rapport à la surface de travail.
